# EUROPEAN PATENT APPLICATION

(11) **EP 2 239 953 A1**
(43) Date of publication of application: **13.10.2010**
(21) Application number: 08868307.3
(22) Date of filing: 07.11.2008

(54) **COMMUNICATION SYSTEM, TERMINAL DEVICE, BASE STATION, COMMUNICATION QUALITY MANAGEMENT METHOD, AND PROGRAM**

(30) Priority: 27.12.2007 JP 2007336523; 31.03.2008 JP 2008091523
(71) Applicant: Panasonic Corporation, Kadoma-shi Osaka 571-8501 (JP)
(72) Inventor: AOYAMA, Takahisa c/o Panasonic Corporation, IPROC, Chuo-ku, Osaka 540-6207 (JP); HIRANO, Jun c/o Panasonic Corporation, IPROC, Chuo-ku, Osaka 540-6207 (JP)
(74) Representative: Grünecker, Kinkeldey, Stockmair & Schwanhäusser Anwaltssozietät
(86) International application number: PCT/JP2008/003230
(87) International publication number: WO 2009/084146

(57) **Abstract**

In a communication system (1), a handover of a terminal device (2) is performed between a base station (eNB (3)) of a 3GPP network and a base station (AR (5)) of a non-3GPP network, a QoS measurement result of the handover target network (non-3GPP network) is reported via an interface (ePDG (6)) provided between the 3GPP network and the non-3GPP network, with the base station (AR (5)) of the non-3GPP network acting as a relay, to the base station (eNB (3)) of the 3GPP network, and the handover to the non-3GPP network is controlled according to the QoS measurement result. Accordingly, a communication system can be provided which is capable of suppressing a reduction in communication quality when a handover is performed between networks with different communication protocols.

## Description

### Technical Field

The present invention is related to a communication system including a function for suppressing a reduction in communication quality when a handover is performed between networks with different communication protocols.

### Background Art

One of the key objectives of LTE (Long Term Evolution)/SAE (System Architecture Evolution) currently under standardization by 3GPP is to be able to accommodate a plurality of RATs (Radio Access Technologies) (refer to Non-Patent Documents 1 and 2). RATs include UTRAN, GERAN, E-UTRAN, WLAN 3GPP access systems, non-3GPP access systems, and the like. Various communication protocols are used in the respective networks. The plurality of RATs respectively have different characteristics (coverage, transmission rate, introduction/operation costs, and the like). For example, such techniques are disclosed in 3GPP TR23.882 V1.12.0, "3GPP System Architecture Evolution (SAE): Report on Technical Options and Conclusions" and in 3GPP TS36.300 V8.2.0, "Evolved Universal Terrestrial Radio Access (E-UTRA) and Evolved Universal Terrestrial Radio Access (E-UTRAN); Overall Description; Stage 2".

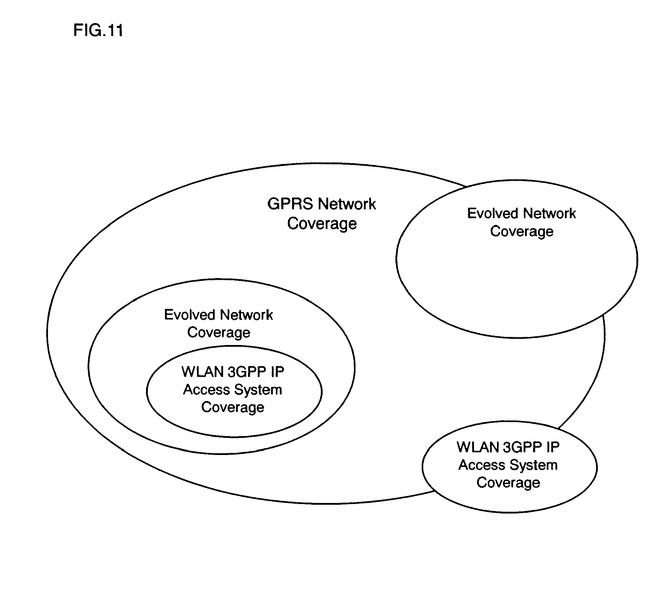

Figure 11 is a diagram illustrating an example of coverage by a plurality of RATs. As illustrated in Figure 11, each RAT covers a different range. For example, a wide coverage is provided by GPRS networks that support GSM (Global System for Mobile)/GPRS (General Packet Radio Service), which is a cellular system that has been used for years in Europe, America or the like, or UMTS (Universal Mobile Telecommunications System) that is recently being used mainly in Japan and the like. In comparison to such networks, the coverage provided by a newly-introduced Evolved network is narrow and the coverage provided by a WLAN to be used at hotspots and the like is even narrower.

In addition, transmission rates differ for each RAT and are in an order of WLAN > E-UTRAN (Evolved UMTS Radio Access Network) > UTRAN (UMTS Radio Access Network). E-UTRAN is a collective term of network-side wireless devices (including base stations) of an Evolved network. In addition, UTRAN is a collective term of UMTS network-side wireless devices (including base stations and RNCs (Radio Network Controllers)) of a GPRS network.

Technology that can accommodate a plurality of RATs is required to effectively use characteristics that differ among RATs. Accommodating a plurality of RATs enables selection such that, for example, a UTRAM of a GPRS network having a wide coverage can be used when a terminal device moves at high speed and a WLAN can be used when the movement speed of a terminal device is low but high-speed communication is needed.

When a terminal device moves between different RATs, a handover is performed for switching base stations to which the terminal device connects. A conventional technique for performing a handover between different wireless communication systems is, for example, a communication system that adopts an MT-TA interface specification (refer to Japanese Patent Laid-Open No. 2005-328412 or the like). In addition, an operation involving moving between different RATs in a state where a terminal device is in communication with a base station is referred to as an inter-RAT handover. Conventionally, for example, a system that performs an inter-RAT handover when moving from a 3GPP2 to a mobile WiMAX has been proposed (refer to 3GPP TR36.938 V1.0.0, "Improved Network Controlled Mobility Between E-UTRAN and 3GPP2/Mobile WiMAX Radio Technologies" or the like). Furthermore, conventionally, a system is known in which a 3GPP network is accessed via a WLAN access point to receive services provided over the 3GPP network (refer to Japanese Patent Laid-Open No. 2007-521691 or the like).

However, in conventional systems, the same QoS (Quality of Service) system is not necessarily adopted by different RATs between which a terminal device moves.
For example, in a network not a 3GPP network (referred to as a non-3GPP network), a QoS service that differs from that of a 3GPP network may be provided. In this case, even if QoS support is provided under a roaming agreement between a 3GPP network and a non-3GPP network, the completely same QoS may not necessarily be supported by the two networks due to differences in QoS systems and the like.

In addition, there may be cases where an operator managing a 3GPP network differs from an operator managing a non-3GPP network. An example is a case where the operator of the 3GPP network is a mobile phone company and the operator of the non-3GPP network is an Internet provider. In this case, control in the non-3GPP network is performed by the Internet provider of the non-3GPP network instead of the operator of the 3GPP network. Therefore, after a handover from the 3GPP network to the non-3GPP network takes place, an operator managing the 3GPP network (source network) can no longer directly manage the QoS of the non-3GPP network (target network).

Furthermore, with conventional systems, after a handover from a 3GPP network to a non-3GPP network has taken place, base stations to which a terminal device accesses are switched. In other words, direct access can no longer be performed from a base station of the 3GPP network to a terminal device. Therefore, the 3GPP network (source network) cannot grasp the QoS state of the non-3GPP network by directly issuing a measurement instruction to a terminal or receiving a report therefrom.

With such conventional systems, the service quality (QoS) of a target network may decline when a terminal device moves from a 3GPP network to a non-3GPP network. For example, even when the QoS of the target network (non-3GPP network) is adjusted in advance with the target network, since the completely same QoS is not supported, there may be cases where the service quality (QoS) of the target network after an actual handover turns out to be low.

In such cases, with conventional systems, since the source network (3GPP network) is unable to grasp the QoS state of the target network (non-3GPP network), the terminal device may end up being consecutively handed over to networks with low QoS. As a result, there is a risk that the reduction in QoS may affect a plurality of terminal devices instead of just one terminal device.

### Disclosure of the Invention

### Problem to be Solved by the Invention

The present invention has been made in consideration of the background described above. An object of the present invention is to provide a communication system capable of suppressing a reduction in communication quality when a handover is performed between networks with different communication protocols.

### Means for Solving the Problem

An aspect of the present invention is a communication system in which, in a network environment having a first network and a second network contained in a communication area of the first network and whose communication protocol differs from that of the first network, a handover of a terminal device is performed between a base station of the first network and a base station of the second network, wherein: the base station of the first network of the communication system includes handover control means that controls a handover to the base station of the second network regarding a terminal device having moved into a communication area of the second network; and the terminal device includes information acquiring means for acquiring communication quality information regarding the communication quality of the second network in response to the handover to the base station of the second network, and information transmitting means that transmits the communication quality information to the base station of the first network via an interface provided between the first network and the second network, with the base station of the second network acting as a relay, in order to control the handover to the base station of the second network.

Another aspect of the present invention is a terminal device for which, in a network environment having a first network and a second network contained in a communication area of the first network and whose communication protocol differs from that of the first network, a handover is performed between a base station of the first network and a base station of the second network, wherein the terminal device includes: information acquiring means for acquiring communication quality information regarding the communication quality of the second network in response to the handover to the base station of the second network; and information transmitting means that transmits the communication quality information to the base station of the first network via an interface provided between the first network and the second network, with the base station of the second network acting as a relay, in order to control the handover to the base station of the second network.

Another aspect of the present invention is a base station provided in a first network in a network environment having the first network and a second network contained in a communication area of the first network and whose communication protocol differs from that of the first network, wherein the base station includes: handover control means that controls a handover to the base station of the second network regarding a terminal device having moved into a communication area of the second network; and information receiving means for receiving communication quality information regarding the communication quality of the second network transmitted from the terminal device via an interface provided between the first network and the second network, with the base station of the second network acting as a relay, in order to control the handover to the base station of the second network.

Another aspect of the present invention is a method of managing communication quality when a handover of a terminal device is performed between a base station of a first network and a base station of a second network in a network environment having the first network and the second network contained in a communication area of the first network and whose communication protocol differs from that of the first network, the method including: acquiring communication quality information regarding the communication quality of the second network in response to the handover to the base station of the second network; and transmitting the communication quality information to the base station of the first network via an interface provided between the first network and the second network, with the base station of the second network acting as a relay, in order to control the handover to the base station of the second network.

Another aspect of the present invention is a program for managing communication quality when a handover of a terminal device is performed between a base station of a first network and a base station of a second network in a network environment having the first network and the second network contained in a communication area of the first network and whose communication protocol differs from that of the first network, the program causing a computer to execute: a process for acquiring communication quality information regarding the communication quality of the second network in response to the handover to the base station of the second network; and a process for transmitting the communication quality information to the base station of the first network via an interface provided between the first network and the second network, with the base station of the second network acting as a relay, in order to control the handover to the base station of the second network.

Another aspect of the present invention is a terminal device on which control is performed in an idle state in a first network in a network environment in which a cell selection from the first network to a second network is performed based on priorities set for each network, the terminal device including: receiving means for receiving cell selection criteria information that is information describing criteria of cell selection from the first network and which includes priority information from the base station of the first network; judging means for judging a validity of a cell selection from the first network based on a result of a cell selection attempted based on the cell selection criteria information; and transmitting means for transmitting a report message that reports a judgment result of the validity of cell selection to the base station of the first network.

Another aspect of the present invention is a communication system in which, in a network environment in which a cell selection from a first network to a second network is performed based on priorities set for each network, communication control is performed between a terminal device in an idle state in the first network and a base station of the first network, wherein: the base station of the first network includes transmitting/receiving means for transmitting/receiving information regarding cell selection to/from the terminal device; and the terminal device includes receiving means for receiving cell selection criteria information that is information describing criteria of cell selection from the first network and which includes priority information from the base station of the first network, judging means for judging a validity of cell selection from the first network based on a result of a cell selection attempted based on the cell selection criteria information, and transmitting means for transmitting a report message that reports a judgment result of the validity of cell selection to the base station of the first network.

Another aspect of the present invention is a terminal device on which control is performed after a cell selection to a second network in a network environment in which a cell selection from a first network to the second network is performed based on priorities set for each network, the terminal device including: receiving means for receiving cell selection criteria information that is information describing criteria of cell selection from the second network and which includes priority information from the base station of the second network; judging means for judging a validity of cell selection to the second network based on the cell selection criteria information; and transmitting means for transmitting a report message that reports a judgment result of the validity of cell selection to the base station of the first network.

Another aspect of the present invention is a communication system in which, in a network environment in which a cell selection from a first network to a second network is performed based on priorities set for each network, communication control is performed between a terminal device after a cell selection to the second network and a base station of the first network, wherein: the base station of the first network and the base station of the second network include transmitting/receiving means for transmitting/receiving information regarding cell selection to/from the terminal device; and the terminal device includes receiving means for receiving cell selection criteria information that is information describing criteria of cell selection from the second network and which includes priority information from the base station of the second network, judging means for judging a validity of cell selection to the second network based on the cell selection criteria information, and transmitting means for transmitting a report message that reports a judgment result of the validity of cell selection to the base station of the first network.

Another aspect of the present invention is a terminal device on which control is performed after a temporary cell selection from a first network to a second network in a network environment in which a cell selection from the first network to the second network is performed based on priorities set for each network, the terminal device including: receiving means for receiving cell selection criteria information that is information describing criteria of temporary cell selection from the first network and which includes fixed-term priority information from the base station of the first network; judging means for judging whether or not a temporary cell selection time limit has been exceeded based on the cell selection criteria information; and transmitting means for transmitting a report message reporting that the time limit has been exceeded to the base station of the first network when it is judged that the temporary cell selection time limit has been exceeded.

Another aspect of the present invention is a communication system in which, in a network environment in which a cell selection from a first network to a second network is performed based on priorities set for each network, communication control is performed between a terminal device after a temporary cell selection to the second network and a base station of the first network, wherein: the base station of the first network includes transmitting/receiving means for transmitting/receiving information regarding temporary cell selection to/from the terminal device; and the terminal device includes receiving means for receiving cell selection criteria information that is information describing criteria of temporary cell selection from the first network and which includes fixed-term priority information from the base station of the first network, judging means for judging whether or not a temporary cell selection time limit has been exceeded based on the cell selection criteria information, and transmitting means for transmitting a report message reporting that the time limit has been exceeded to the base station of the first network when it is judged that the temporary cell selection time limit has been exceeded.

As will be described below, other aspects of the present invention exist. Therefore, the disclosure of the present invention is intended to provide a portion of the aspects of the present invention and not to limit the scope of the claims described herein.

### Brief Description of the Drawings

Figure 1 is a block diagram of a terminal device and a base station of a communication system according to a first embodiment;
Figure 2 is an explanatory diagram of communication areas of a 3GPP network and a non-3GPP network;
Figure 3 is an explanatory diagram illustrating a mobile terminal inside a communication area of a 3GPP network accessing the 3GPP network;
Figure 4 is an explanatory diagram of a terminal device having moved into a communication area of a non-3GPP network;
Figure 5 is an explanatory diagram illustrating a mobile terminal inside a communication area of a non-3GPP network accessing the non-3GPP network;
Figure 6 is a diagram illustrating a flow of operations of a communication system according to the first embodiment;
Figure 7 is a block diagram of a terminal device and a base station of a communication system according to a second embodiment;
Figure 8 is a diagram illustrating a flow of operations of a communication system according to the second embodiment;
Figure 9 is a diagram illustrating a flow of an operation for requesting a QoS measurement to another terminal device;
Figure 10 is a diagram illustrating an example of communication quality information;
Figure 11 is an explanatory diagram illustrating coverage by a plurality of RATs;
Figure 12 is a block diagram of a terminal device and a base station of a communication system according to a third embodiment;
Figure 13 is a diagram illustrating an example of broadcast information in a first network;
Figure 14 is a flow diagram illustrating a flow of operations of a communication system according to the third embodiment;
Figure 15 is a block diagram of a terminal device and a base station of a communication system according to a fourth embodiment;
Figure 16 is a diagram illustrating an example of broadcast information in a first network and a second network;
Figure 17 is a flow diagram illustrating a flow of operations of a communication system according to the fourth embodiment;
Figure 18 is a block diagram of a terminal device and a base station of a communication system according to a fifth embodiment; and
Figure 19 is a flow diagram illustrating a flow of operations of a communication system according to the fifth embodiment.

### Description of Symbols

- 1: communication system
- 2: terminal device
- 3: base station of 3GPP network (eNB)
- 4: interface (P-GW)
- 5: base station of non-3GPP network (AR)
- 6: interface (ePDG)
- 7: first signal receiving unit
- 8: second signal receiving unit
- 9: QoS setting unit
- 10: first mobility control unit
- 11: reception converter unit
- 12: second mobility control unit
- 13: QoS measuring unit
- 14: QoS threshold setting unit
- 15: first signal transmitting unit
- 16: transmission converter unit
- 17: second signal transmitting unit
- 18: transmitting/receiving unit
- 19: handover control unit
- 100: communication system
- 101: terminal device
- 102: base station
- 103: first signal receiving unit
- 104: first signal measuring unit
- 105: first mobility control setting unit
- 106: second signal receiving unit
- 107: second signal measuring unit
- 108: second mobility control setting unit
- 109: reception converter unit
- 110: transmission converter unit
- 111: movement control monitoring unit
- 112: first signal transmitting unit
- 113: second signal transmitting unit
- 114: transmitting/receiving unit
- 200: communication system
- 201: terminal device
- 202: base station
- 203: first signal receiving unit
- 204: first signal measuring unit
- 205: first mobility control setting unit
- 206: second signal receiving unit
- 207: second signal measuring unit
- 208: second mobility control setting unit
- 209: reception converter unit
- 210: transmission converter unit
- 211: movement control monitoring unit
- 212: first signal transmitting unit
- 213: second signal transmitting unit
- 214: transmitting/receiving unit
- 300: communication system
- 301: terminal device
- 302: base station
- 303: first signal receiving unit
- 304: first signal measuring unit
- 305: first mobility control setting unit
- 306: second signal receiving unit
- 307: second signal measuring unit
- 308: second mobility control setting unit
- 309: reception converter unit
- 310: transmission converter unit
- 311: timer monitoring unit
- 312: first signal transmitting unit
- 313: second signal transmitting unit
- 314: transmitting/receiving unit

### Best Mode for Carrying Out the Invention

A detailed description of the present invention will be given below. However, the detailed description given below and the attached drawings are not intended to limit the present invention. Instead, the scope of the present invention is to be defined by the attached claims.

Hereinafter, communication systems according to embodiments of the present invention will be described with reference to the drawings. A terminal device to be used in the communication systems is provided with a function for suppressing a reduction in communication quality when a handover is performed between networks with different communication protocols. Such a function is to be realized by a program stored in an HDD or a memory of the terminal device.

In the following description of the embodiments, a system stipulated by 3GPP such as a GPRS system, a UMTS system, and an LTE system shall be referred to as a 3GPP network and a system not defined by 3GPP such as a WLAN system, a WiMAX (IEEE802.16, IEEE802.16e and the like) system, and a 3GPP2 system shall be referred to as a non-3GPP system. The present invention is not limited to a handover between a 3GPP network and a non-3GPP system and is equally applicable to, for example, a handover between a 3GPP2 network and a WiMAX network.

### (First Embodiment)

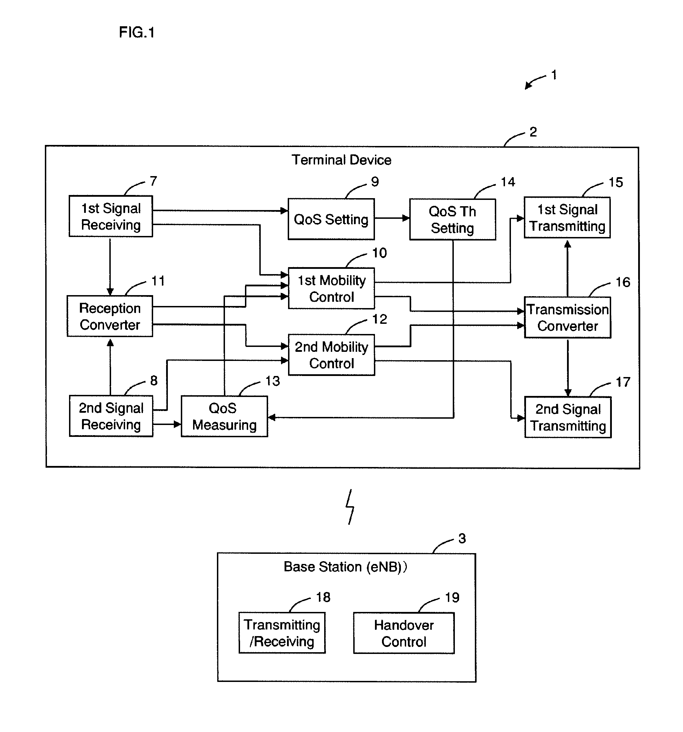

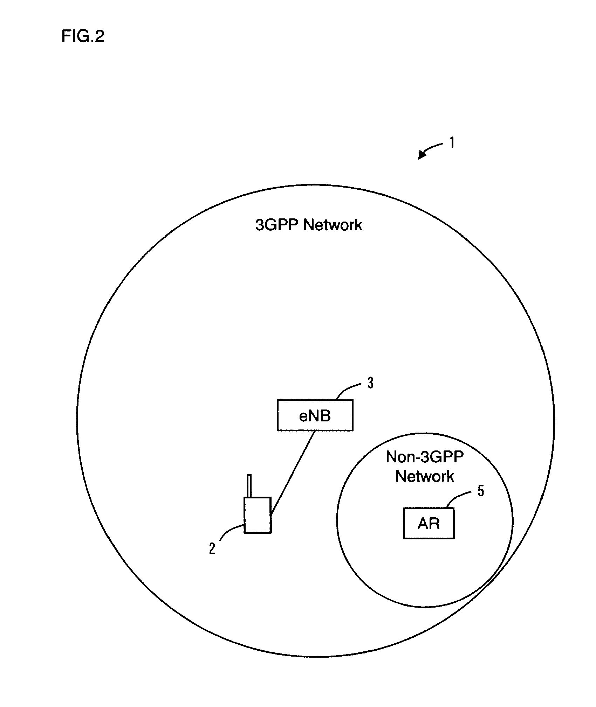

A communication system according to a first embodiment of the present invention will now be described with reference to Figures 1 to 6. Figure 1 is a block diagram illustrating configurations of a terminal device and a base station used in a communication system according to the present embodiment. Figure 2 is an explanatory diagram of communication areas of a 3GPP network and a non-3GPP network. First, a network environment of a communication system according to the present embodiment will be described with reference to Figure 2.

As illustrated in Figure 2, in a communication system 1 according to the present embodiment, a communication area of a 3GPP network is wider than a communication area of a non-3GPP network. The communication area of the non-3GPP network is contained in the communication area of the 3GPP network. In addition, different communication protocols are respectively used in the 3GPP network and the non-3GPP network. In this case, the 3GPP network corresponds to a first network according to the present invention and the non-3GPP network corresponds to a second network according to the present invention.

The 3GPP network is provided with an eNB (EUTRAN Node B) 3 as a base station that communicates with a terminal device 2 in the communication area. The eNB 3 includes an AS (Access Stratum) function and is capable of performing mobility control of the terminal device 2 in the communication area of the 3GPP network. For example, the eNB 3 allocates a wireless channel to the terminal device 2 and communicates with the terminal device 2 using the channel in accordance with a QoS determined by an higher-level entity (such as an MME).
An MME (Mobility Management Entity) includes functions of a NAS (Non Access Stratum) and is a mobility management entity responsible for deciding a QoS necessary for services to be provided to the terminal device 2, authenticating the terminal device 2, and the like. In this case, the eNB 3 corresponds to a base station of the first network according to the present invention.

In addition, the 3GPP network is provided with a P-GW (Packet Gateway) 4 as an interface with the Internet (not shown). When a service (for example, voice communication, data download, and the like) is to be provided to the terminal device 2 in the 3GPP network, data regarding the service reaches the P-GW 4 from the Internet to be forwarded from the P-GW 4 to the terminal device 2 via the eNB 3.

The non-3GPP network is provided with an AR (Access Router) 5 as a base station (also referred to as an access router) that communicates with the terminal device 2 in the communication area. The AR 5 includes a function for performing mobility control of the terminal device 2 in the communication area of the non-3GPP network. In this case, the AR 5 corresponds to a base station of the second network according to the present invention. The non-3GPP network may adopt other configurations such as a configuration including a base station and its upper-level node.

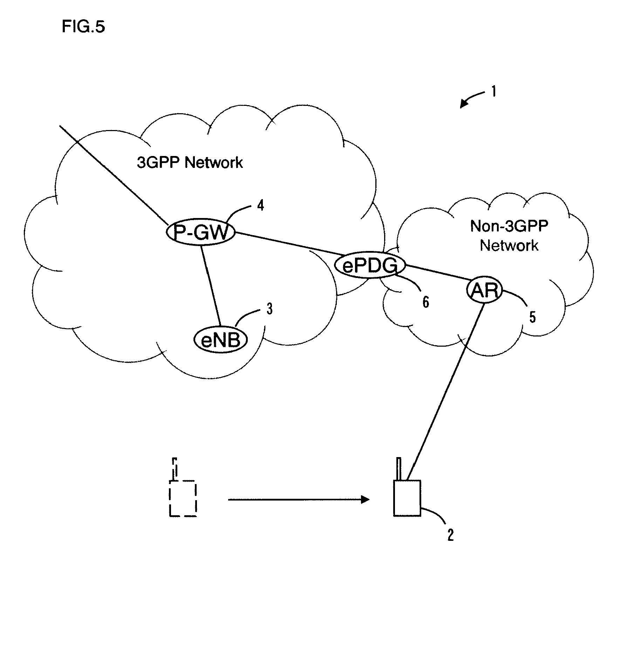

In addition, the non-3GPP network is provided with an ePDG (evolved Packet Data Gateway) 6 as an interface with the 3GPP network (refer to Figure 5). Data communication from the base station (AR 5) of the non-3GPP network to the base station (eNB 3) of the 3GPP network is made possible via the ePDG 6. In other words, the use of "tunneling" enables data communication between the 3GPP network and the non-3GPP network.

Tunneling will now be briefly described. Tunneling refers to setting a virtual path and exchanging data or control information over the path. In the present embodiment, specifically, an exchange of information between the terminal device 2 and the AR 5 is conceived when a handover is performed from the 3GPP network to the non-3GPP network. Before a handover is performed, the terminal device 2 and the AR 5 are unable to directly exchange information because the terminal device 2 and the AR 5 are not connected to each other. Therefore, information to be exchanged between the terminal device 2 and the AR 5 can conceivably be exchanged by embedding the information in a message to be exchanged between the terminal device 2 and the eNB 3 and in a message to be exchanged between the eNB 3 and the AR 5. This means that a virtual path is set between the terminal device 2 and the AR 5 and communication can be performed without a direct connection.

Normally, when a handover from the 3GPP network to the non-3GPP network is performed, base stations to which the terminal device 2 accesses are switched from the eNB 3 to the AR 5. Therefore, the 3GPP network becomes unable to directly access the terminal device 2 after the handover to the non-3GPP network. However, in the present embodiment, even after a handover to the non-3GPP network is made, the terminal device 2 can be accessed from the 3GPP network by using tunneling (via the ePDG 6) (refer to Figure 5).

Next, returning to Figure 1, configurations of the terminal device 2 and the base station (eNB 3) used in the communication system 1 will be described. First, a configuration of the terminal device 2 will be described. As illustrated in Figure 1, the terminal device 2 includes: a first signal receiving unit 7 that receives a signal from the base station (eNB 3) of the 3GPP network; and a second signal receiving unit 8 that receives a signal from the base station (AR 5) of the non-3GPP network. Demodulation processing of a wireless signal or the like received from the 3GPP network is performed at the first signal receiving unit 7. In addition, demodulation processing of a wireless signal or the like received from the non-3GPP network is performed at the second signal receiving unit 8.

When the first signal receiving unit 7 receives QoS control information regarding the 3GPP network, the first signal receiving unit 7 sends the QoS control information to a QoS setting unit 9. In addition, when the first signal receiving unit 7 receives mobility control information regarding the 3GPP network, the first signal receiving unit 7 sends the mobility control information to a first mobility control unit 10. In addition, when the first signal receiving unit 7 receives control information regarding exchange with the non-3GPP network (non-3GPP network control information) via the 3GPP network, the first signal receiving unit 7 sends the non-3GPP network control information to a reception converter unit 11.

When the second signal receiving unit 8 receives mobility control information regarding the non-3GPP network, the second signal receiving unit 8 sends the mobility control information to a second mobility control unit 12. In addition, when the second signal receiving unit 8 receives control information regarding exchange with the 3GPP network (3GPP network control information) via the non-3GPP network, the second signal receiving unit 8 sends the 3GPP network control information to the reception converter unit 11. Furthermore, when the second signal receiving unit 8 receives control information regarding services to be provided in the non-3GPP network (normal data other than control information and the like), the second signal receiving unit 8 sends the information to a QoS measuring unit 13.

The reception converter unit 11 includes a function for converting a format of the control information of the terminal device 2 received at the first signal receiving unit 7 or the second signal receiving unit 8. When receiving non-3GPP network control information via the 3GPP network (at the first signal receiving unit 7), the non-3GPP network control information is to be received in a 3GPP network format. In this case, the reception converter unit 11 converts control information in the 3GPP network format into a non-3GPP network format. In addition, when receiving 3GPP network control information via the non-3GPP network (at the second signal receiving unit 8), the control information is to be received in the non-3GPP network format. In this case, the reception converter unit 11 converts control information in the non-3GPP network format into the 3GPP network format.

Non-3GPP network control information received at the first signal receiving unit 7 is converted into the non-3GPP network format by the reception converter unit 11 and then sent to the second mobility control unit 12. In addition, 3GPP network control information received at the second signal receiving unit 8 is converted into the 3GPP network format by the reception converter unit 11 and then sent to the first mobility control unit 10.

The QoS setting unit 9 includes a function for setting a QoS of services provided to the terminal device 2 in the 3GPP network. The QoS setting unit 9 sets the QoS of the 3GPP network based on QoS control information of the 3GPP network received from the first signal receiving unit 7. The QoS control information includes QoS threshold information (to be described later) on the non-3GPP network and is sent from the QoS setting unit 9 to a QoS threshold setting unit 14.

The first mobility control unit 10 includes a function for performing mobility control of the terminal device 2 in the 3GPP network. Mobility control information of the 3GPP network is processed and set at the first mobility control unit 10. In addition, messages to be transmitted to the 3GPP network (messages regarding mobility control of the terminal device 2) are created at the first mobility control unit 10. When a message is to be directly transmitted to the 3GPP network, the message is sent from the first mobility control unit 10 to a first signal transmitting unit 15. In addition, when a message is to be transmitted via the non-3GPP network (using tunneling) to the 3GPP network, the message is sent from the first mobility control unit 10 to a transmission converter unit 16. As will be described later, the message is to include information on the QoS of the non-3GPP network as measured by the QoS measuring unit 13. Moreover, in the present embodiment, an RRC message (Radio Resource Control message) is to be used as the message. In addition, QoS information is to include information such as network throughput, delay, and error rate.

The second mobility control unit 12 includes a function for performing mobility control of the terminal device 2 in the non-3GPP network. Mobility control information of the non-3GPP network is processed and set at the second mobility control unit 12. In addition, messages to be transmitted to the non-3GPP network (messages regarding mobility control of the terminal device 2) are created at the second mobility control unit 12. When a message is to be directly transmitted to the non-3GPP network, the message is sent from the second mobility control unit 12 to a second signal transmitting unit 17. In addition, when a message is to be transmitted via the 3GPP network (using tunneling) to the non-3GPP network, the message is sent from the second mobility control unit 12 to the transmission converter unit 16.

The QoS threshold setting unit 14 includes a function for setting criteria of quality of services received by the terminal device 2 in the non-3GPP network. The criteria of service quality in the non-3GPP network is set based on QoS threshold information received from the QoS setting unit 9. The QoS threshold information may include a QoS threshold itself to be used as QoS criteria, or may be information for setting a QoS threshold. For example, an absolute value of the QoS may be used as the QoS threshold. In addition, for example, a piece of information expressed as "80%" may be used as information for setting a QoS threshold, in which case a value equivalent to 80% of the QoS set at the QoS setting unit 9 is to be set as the QoS threshold. In this case, the QoS threshold setting unit 14 corresponds to transmission condition setting means according to the present invention.

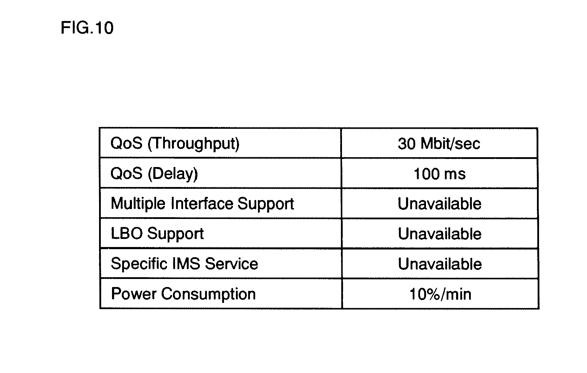

The QoS measuring unit 13 includes a function for measuring the QoS (quality of service) of the non-3GPP network and comparing the same with a QoS threshold received from the QoS threshold setting unit 14. When the measured QoS (the QoS of the non-3GPP network) falls below the QoS threshold, the QoS measuring unit 13 sends the QoS information to the first mobility control unit 10. Subsequently, information on the QoS measured by the QoS measuring unit 13 (e.g., 30 Mbit/second; refer to Figure 10) is included in a message created at the first mobility control unit 10 and transmitted to the 3GPP network using tunneling. In this case, the QoS information corresponds to communication quality information according to the present invention and the QoS measuring unit 13 to information acquiring means according to the present invention.

The transmission converter unit 16 includes a function for converting a format of the control information of the terminal device 2 transmitted from the first signal transmitting unit 15 or the second signal transmitting unit 17. When transmitting non-3GPP network control information via the 3GPP network (from the first signal transmitting unit 15), the control information is to be transmitted in a 3GPP network format. In this case, the transmission converter unit 16 converts control information in the non-3GPP network format into the 3GPP network format. In addition, when transmitting 3GPP network control information via the non-3GPP network (from the second signal transmitting unit 17), the control information is to be transmitted in the non-3GPP network format. In this case, the transmission converter unit 16 converts control information in the3GPP network format into the non-3GPP network format.

Non-3GPP network control information transmitted from the first signal transmitting unit 15 is converted into the 3GPP network format by the transmission converter unit 16 and then sent to the first mobility control unit 10. In addition, 3GPP network control information transmitted from the second signal transmitting unit 17 is converted into the non-3GPP network format by the transmission converter unit 16 and then sent to the second mobility control unit 12.

The first signal transmitting unit 15 transmits a signal to the base station (eNB 3) of the 3GPP network. Modulation of a wireless signal or the like to be transmitted to the 3GPP network is processed at the first signal transmitting unit 15. In addition, the second signal transmitting unit 17 transmits a signal to the base station (AR 5) of the non-3GPP network. Modulation of a wireless signal or the like to be transmitted to the non-3GPP network is processed at the second signal transmitting unit 17. In the present embodiment, QoS information is to be transmitted to the base station (eNB 3) of the 3GPP network via the ePDG 6 (using tunneling), with the base station (AR 5) of the non-3GPP network acting as a relay. Therefore, in this case, the second signal transmitting unit 17 corresponds to information transmitting means according to the present invention.

Next, a configuration of the base station (eNB 3) of the 3GPP network will be described. As illustrated in Figure 1, the eNB 3 includes: a transmitting/receiving unit 18 that transmits/receives information from/to the terminal device 2 in the communication area; and a handover control unit 19 that controls a handover between the 3GPP network and the non-3GPP network.

At the eNB 3, when communication with the terminal device 2 is initiated or when a handover to the base station (AR 5) of the non-3GPP network is performed, QoS threshold information is transmitted from the transmitting/receiving unit 18 to the terminal device 2. Therefore, the transmitting/receiving unit 18 corresponds to condition transmitting means according to the present invention.

In addition, at the handover control unit 19, when the terminal device 2 moves into the communication area of the non-3GPP network, control of a handover to the base station (AR 5) of the non-3GPP network is performed as described later. In this case, the handover control unit 19 corresponds to handover control means according to the present invention.

Operations of the communication system 1 configured as described above will be described with reference to the drawings.

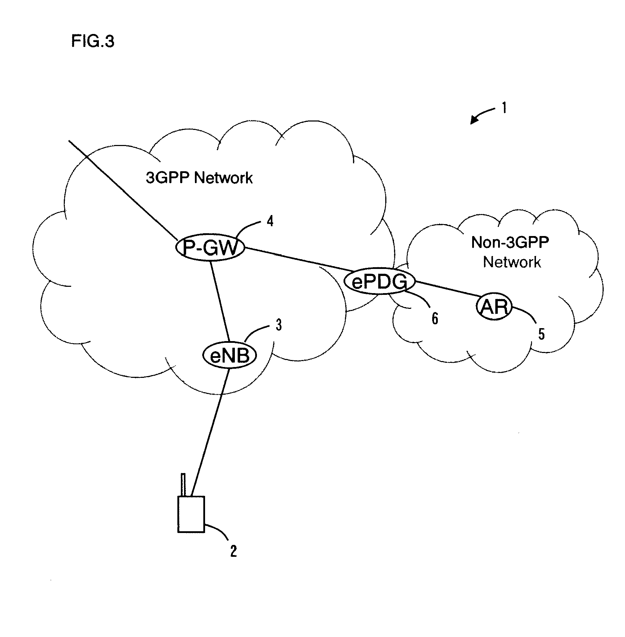

First, handover control will be described with reference to Figures 2 to 5. Figure 2 is a diagram illustrating a state where the terminal device 2 is inside the communication area of the 3GPP network (but not inside the communication area of the non-3GPP network). In addition, Figure 3 is an diagram illustrating a mobile terminal inside the communication area of the 3GPP network (but not inside the communication area of the non-3GPP network) accessing the 3GPP network.

As illustrated in Figures 2 and 3, when the terminal device 2 is in the communication area of the 3GPP network and not in the communication area of the non-3GPP network, the mobile terminal connects to the base station (eNB 3) of the 3GPP network. The mobile terminal in the communication area of the 3GPP network then connects to the Internet with the eNB 3 acting as a relay (via the P-GW 4), and receives service.

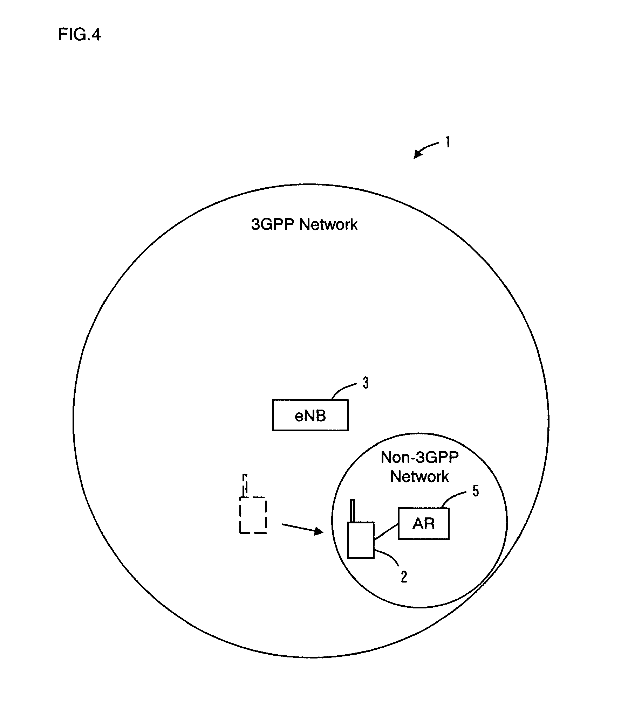

Figure 4 is a diagram of the terminal device 2 having moved into the communication area of the non-3GPP network. In addition, Figure 5 is a diagram illustrating the mobile terminal inside the communication area of the non-3GPP network accessing the non-3GPP network.

As illustrated in Figures 4 and 5, when the terminal device 2 moves into the communication area of the non-3GPP network, a handover from the 3GPP network to the non-3GPP network is performed. In other words, base stations to which the mobile terminal accesses are switched from the base station (eNB 3) of the 3GPP network to the base station (AR 5) of the non-3GPP network.

That is, when a handover is performed in this manner, the mobile terminal connects to the base station (AR 5) of the non-3GPP network. The mobile terminal in the communication area of the non-3GPP network then connects to the Internet with the AR 5 acting as a relay (via the ePDG 6 and the P-GW 4), and receives service.

Once a handover from the 3GPP network to the non-3GPP network is performed in this manner, the base station of the 3GPP network and the terminal device 2 are no longer able to communicate with each other. However, in the present embodiment, even after the handover to the non-3GPP network, the use of tunneling (via the ePDG 6) enables the base station of the 3GPP network and the terminal device 2 to communicate with each other.

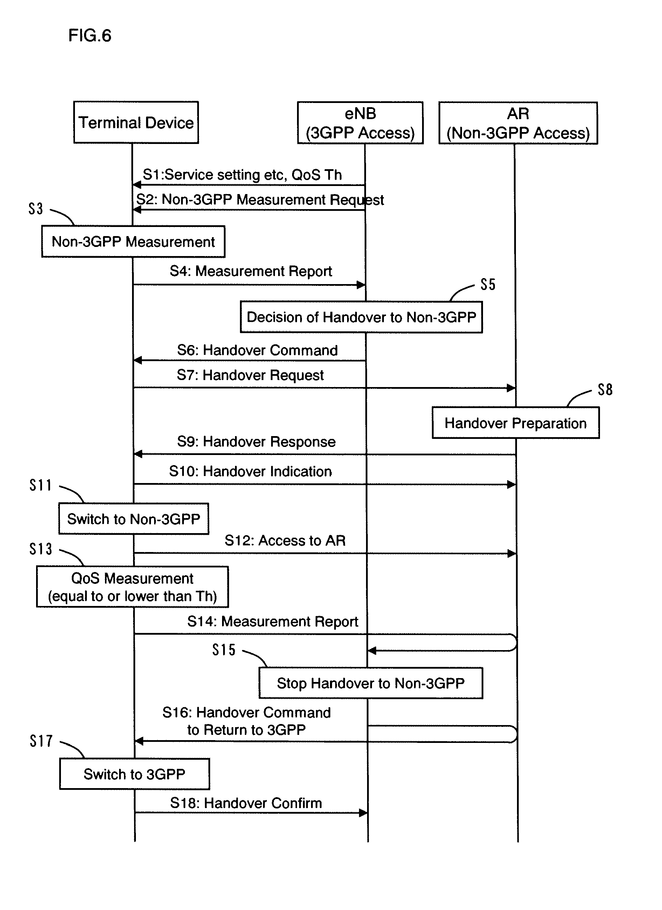

Next, characteristic operations of the present invention will be described with reference to Figure 6.

Here, handover control will be described that is carried out when a handover from the 3GPP network to the non-3GPP network is performed and the QoS of the handover target network (non-3GPP network) is low.

Figure 6 is a flow diagram illustrating a flow of handover control according to the present embodiment. As illustrated in Figure 6, first, a message (RRC message) is transmitted from the base station (eNB 3) of the 3GPP network to the terminal device 2 (S1). The message includes: a service setting enabling the terminal device 2 to receive service inside the 3GPP network; a channel setting for receiving service; and information for setting a QoS threshold. Having received the message, the terminal device 2 performs service setting and channel setting processes. In addition, at this point, a QoS threshold at which a measurement report must be made when moving to the non-3GPP network is set at the QoS threshold setting unit 14 of the terminal device 2.

Next, a measurement request for a communication state of the handover target network (non-3GPP network) is transmitted from the base station (eNB 3) of the 3GPP network to the terminal device 2 (S2). While the measurement request is transmitted when there is a possibility that the terminal device 2 may enter the communication area of the non-3GPP network, the determination is left to the discretion of the eNB 3 and any determination can be made. For example, a measurement request can be arranged so as to be always made to the terminal when the area of the non-3GPP network is within a range of the eNB 3, or a measurement request can be arranged so as to be made based on a reception quality of the terminal in the 3GPP network. A communication state of the non-3GPP network is measured at the terminal device 2 having received the measurement request (S3). For example, a measurement of a reception quality of the non-3GPP network is performed. The terminal device 2 then transmits a report of the measurement result to the base station (eNB 3) of the 3GPP network (S4). Moreover, the measurement report can alternatively be reported regularly to the eNB 3 or may be arranged so as to be transmitted only when the reception quality of the non-3GPP network satisfies specific conditions (for example, when a given threshold is exceeded). Settings thereof are performed in S2.

The base station (eNB 3) of the 3GPP network determines whether or not a handover to the non-3GPP network is to be performed based on the measurement report received from the terminal device 2. For example, when the measurement report satisfies prescribed criteria, it is decided that a handover to the non-3GPP network is to be performed (S5).

Subsequently, when a handover command is transmitted from the base station (eNB 3) of the 3GPP network to the terminal device 2 (S6), a handover request is transmitted from the terminal device 2 to the base station (AR 5) of the non-3GPP network (S7). The base station (AR 5) of the non-3GPP network having received the handover request initiates preparation for a handover of the terminal device 2 (S8). When handover preparation is completed, a handover response is transmitted from the base station (AR 5) of the non-3GPP network to the terminal device 2 (S9).

The terminal device 2 having received the handover response transmits a handover indication indicating that a handover is to be performed to the base station (AR 5) of the non-3GPP network (S10), and subsequently performs a switch to the non-3GPP network (S11). The terminal device 2 then initiates access to the base station (AR 5) of the non-3GPP network (S12). A handover from the 3GPP network to the non-3GPP network takes place in this manner.

After the handover is performed, the terminal device 2 measures the QoS of the handover target network (non-3GPP network) and compares the measured QoS with the QoS threshold set in S1 (S13). When the value of the measured QoS is equal to or lower than the QoS threshold, the measurement result is reported to the 3GPP network. In this case, by using tunneling (via the ePDG 6), the QoS measurement result is transmitted from the terminal device 2 to the base station (eNB 3) of the 3GPP network.

In this manner, the base station (eNB 3) of the 3GPP network having received the measurement report to the effect that the QoS value is equal to or lower than the QoS threshold suspends the handover to the non-3GPP network (S15). Accordingly, handovers to the non-3GPP network are to no longer be performed for terminal devices 2 subsequently moved into the communication area of the non-3GPP network.

Moreover, while an example of suspending a handover to the non-3GPP network has been described, the scope of the present invention is not limited thereto and a handover to the non-3GPP network may be suppressed instead. For example, a handover to the non-3GPP network may be inhibited by setting high criteria when deciding a handover to the non-3GPP network (S5), setting criteria for transmitting the measurement report (S4) to be set in S2 to high criteria, or the like.

In addition, for the terminal device 2 already handed over to the non-3GPP network, a handover command for performing a handover to return the terminal device 2 to the 3GPP network is to be transmitted (S16). In this case, by using tunneling (via the ePDG 6), the handover command is transmitted from the base station (eNB 3) of the 3GPP network to the terminal device 2.

The terminal device 2 having received the handover command performs switching to the non-3GPP network (S17) and transmits a handover confirmation to the 3GPP network (S18). The handover confirmation may include detailed information regarding the state of the non-3GPP network (information other than QoS or more detailed information on QoS).

With the communication system 1 according to the first embodiment of the present invention described above, by transmitting QoS information of a non-3GPP network (target network) to a base station (eNB 3) of a 3GPP network (source network) via an interface (ePDG 6) between the 3GPP network and the non-3GPP network, with a base station (AR 5) of the non-3GPP network acting as a relay, and by performing control of a handover to the non-3GPP network based on the QoS information, a reduction in the QoS when a handover is performed between the 3GPP network and the non-3GPP network can be suppressed.

In other words, according to the present embodiment, even after a handover from the 3GPP network to the non-3GPP network is performed and base stations are switched, QoS information of the non-3GPP network (target network) is transmitted to the base station (eNB 3) of the 3GPP network (source network) via the interface (ePDG 6) between the 3GPP network the non-3GPP network, with the base station (AR 5) of the non-3GPP network acting as a relay. Accordingly, the 3GPP network (source network) is able to grasp the QoS state of the non-3GPP network (target network). In addition, the 3GPP network (source network) is able to appropriately control a handover to the non-3GPP network (target network) while taking the QoS state of the non-3GPP network into consideration. Consequently, handover control is performed so as to suppress a reduction in QoS.

For example, in the present embodiment, handover control is performed so as to return a terminal device 2 that has been handed over to a non-3GPP network with a low QoS to a 3GPP network (source network). In other words, even if the terminal device 2 enters a communication area of the non-3GPP network, when the QoS of the non-3GPP network is low, a handover to return the terminal device 2 to the 3GPP network is performed. Consequently, handover control is performed so as to suppress a reduction in QoS.

In addition, in the present embodiment, when the QoS of the non-3GPP network (target network) is low, a handover to the non-3GPP network is suppressed or suspended. In other words, even if the terminal device 2 moves into the communication area of the non-3GPP network, when the QoS of the non-3GPP network is low, a handover to the 3GPP network is arranged so as not to be performed. Consequently, handover control is performed so as to suppress a reduction in QoS.

As described above, in the present embodiment, after a handover of the terminal device 2 is performed, a QoS state of the handover target network (non-3GPP network) is reported to the handover source network (3GPP network). In this manner, by notifying the handover source network that the QoS of the handover target network is low, a difference between the QoS of the two networks is eliminated.

Furthermore, in the present embodiment, whether or not to transmit QoS information of the non-3GPP network (target network) is decided using a set QoS threshold as criteria. For example, when the QoS of the non-3GPP network (target network) is equal to or lower than a prescribed QoS threshold, QoS information of the non-3GPP network is transmitted. Consequently, QoS information on the non-3GPP network is to be reported at an appropriate frequency.

In this case, the QoS threshold is to be transmitted from the base station (eNB 3) of the 3GPP network to the terminal device 2 upon initiation of the communication between the base station (eNB 3) of the 3GPP network and the terminal device 2. Consequently, the QoS threshold can be set at an appropriate timing.

### (Second Embodiment)

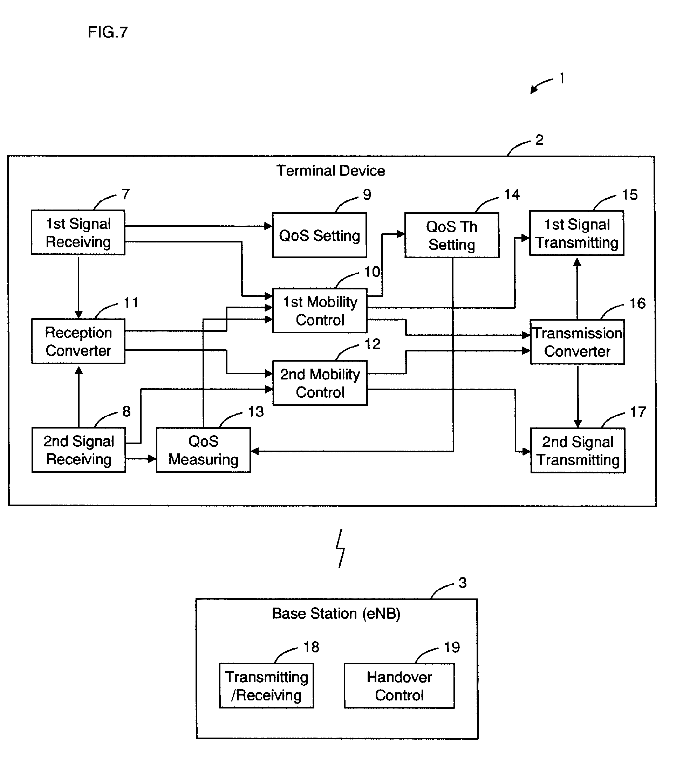

Next, a communication system 1 according to a second embodiment of the present invention will now be described with reference to Figures 7 to 9. Here, points in which the communication system 1 according to the present embodiment differs from the first embodiment will be primarily described. As such, unless particular reference is made, configurations and operations according to the present embodiment are the same as those of the first embodiment.

The present embodiment differs from the first embodiment in that QoS threshold information is not included in QoS control information to be sent from a first signal receiving unit 7 to a QoS setting unit 9 and is instead included in mobility control information of a 3GPP network to be sent from the first signal receiving unit 7 to a first mobility control unit 10.

Figure 7 is a block diagram illustrating configurations of a terminal device 2 and a base station used in the communication system 1 according to the present embodiment. As illustrated in Figure 7, in the present embodiment, the QoS setting unit 9 is not configured so as to send QoS threshold information to a QoS threshold setting unit 14 and the first mobility control unit 10 is instead configured so as to send QoS threshold information to the QoS threshold setting unit 14.

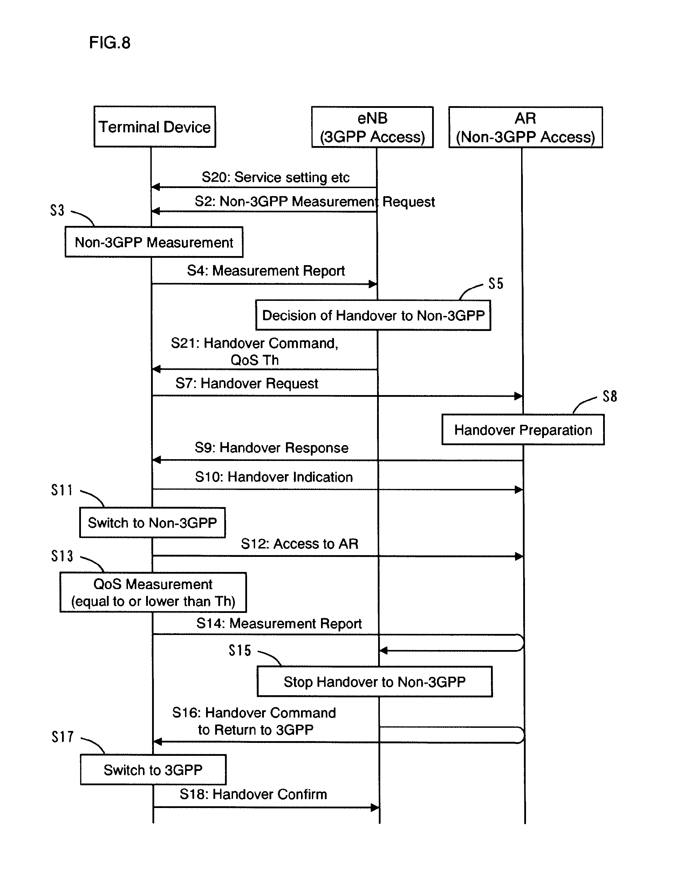

Figure 8 is a flow diagram illustrating a flow of handover control according to the present embodiment. As illustrated in Figure 8, first, a message is transmitted from the base station (eNB 3) of the 3GPP network to the terminal device 2 (S20). Although the message includes a service setting enabling the terminal device 2 to receive service inside the 3GPP network and a channel setting for receiving service, the message does not include information for setting a QoS threshold. Therefore, at this point, a QoS threshold of the non-3GPP network is not set at the QoS threshold setting unit 14 of the terminal device 2.

In the present embodiment, when a handover command is transmitted from the base station (eNB 3) of the 3GPP network to the terminal device 2, QoS threshold information is simultaneously transmitted (S21). The QoS threshold information is received at the first signal receiving unit 7 and sent from the first mobility control unit 10 to the QoS threshold setting unit 14. Subsequently, a QoS threshold of the non-3GPP network is set at the QoS threshold setting unit 14.

In addition, the present embodiment differs in that when a QoS measurement report is received from a terminal device 2 (terminal device A), a request for QoS measurement is made to another terminal device 2 (terminal device B).

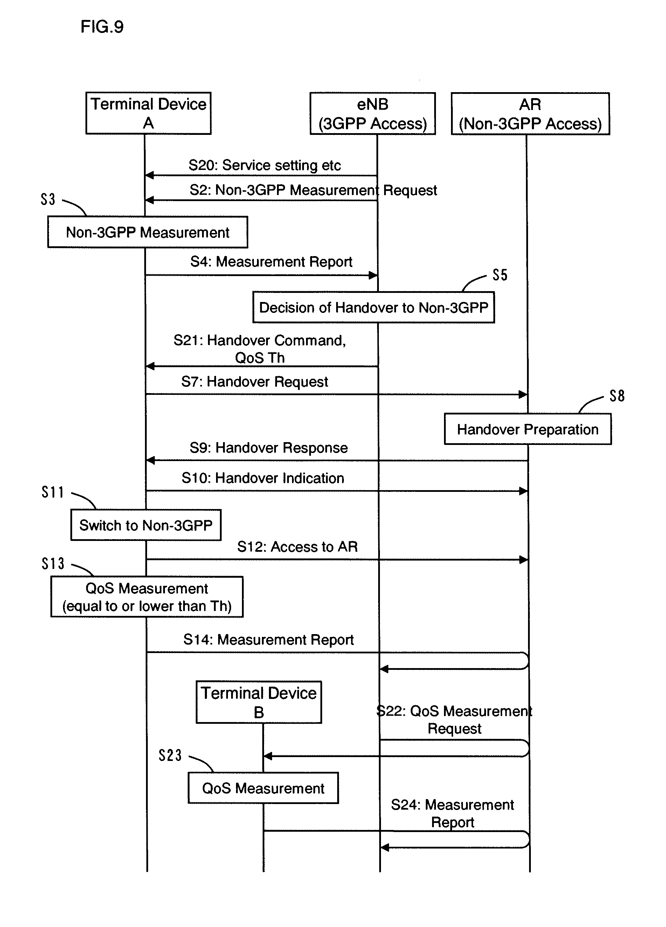

Figure 9 is a flow diagram illustrating a flow of control when requesting a QoS measurement to another terminal device 2 (terminal device B). As illustrated in Figure 9, upon receiving a measurement report from the terminal device A in the non-3GPP network to the effect that the QoS value is equal to or lower than the QoS threshold, the base station (eNB 3) of the 3GPP network transmits a QoS measurement request to another terminal device B in the non-3GPP network (S22). In this case, by using tunneling (via the ePDG 6), the QoS measurement request is transmitted from the base station (eNB 3) of the 3GPP network to the terminal device B.

The terminal device B having received the QoS measurement request performs a measurement of the QoS of the non-3GPP network (S23) and transmits a measurement result thereof to the 3GPP network (S24). Similarly, in this case, by using tunneling (via the ePDG 6), the QoS measurement result is transmitted from the terminal device B to the base station (eNB 3) of the 3GPP network.

Even with the communication system 1 according to the second embodiment of the present invention described above, operational advantages similar to the first embodiment can be achieved.

In the present embodiment, a QoS threshold is sent from the base station of the 3GPP network to the terminal device 2 upon handover to the non-3GPP network. Consequently, the QoS threshold can be set at an appropriate timing.

In addition, with the present embodiment, since QoS information of the handover target network (non-3GPP network) can also be obtained at another terminal device (terminal device B) instead of only at one terminal device (terminal device A), the reliability of QoS information can be improved.

Moreover, in the present embodiment, an example has been described in which QoS threshold information is included in mobility control information of the 3GPP network to be sent from the first signal receiving unit 7 to the first mobility control unit 10. However, the scope of the present invention is not limited thereto, and QoS threshold information may be included in mobility control information of the non-3GPP network to be sent from the second signal receiving unit 8 to the first mobility control unit 10 via a reception converter unit 11.

Furthermore, in the present embodiment, QoS threshold information may be included in QoS control information to be sent from the first signal receiving unit 7 to the QoS setting unit 9. In this case, in a similar manner to the first embodiment, the QoS setting unit 9 is to be configured so as to send QoS threshold information to the QoS threshold setting unit 14.

Although embodiments of the present invention have been described above by way of example, the scope of the present invention is not limited thereto and may be altered and modified depending on the intended use within the scope set forth in the claims.

For instance, an example in which an RRC message is used as a message for reporting a QoS measurement result of the handover target network (non-3GPP network) has been described above. However, the scope of the present invention is not limited thereto and an NAS message may be used in order to report a specific result regarding service.

In addition, while an example in which a QoS measurement result is reported to a base station (eNB 3) of a 3GPP network using an RRC message has been described above, for example, when using an NAS message, a report may be arranged to be made to an MME (Mobility Management Entity) having a control function of an NAS of the 3GPP network. In this case, threshold information that becomes a trigger for transmitting a QoS measurement result is to be also transmitted to the terminal using an NAS message. Furthermore, in a case where an MME partially includes an RRC function, an operation such as transmitting an RRC message to the MME is also possible.

Moreover, while an example in which QoS information is transmitted as communication quality information has been described above, the scope of the present invention is not limited thereto. As illustrated in Figure 10, besides QoS information (for example, throughput of 30 Mbit/second or higher, delay of less than 100 ms), communication quality information may include: information regarding multiple interface support; information regarding LBO support; information regarding availability of a specific IMS service; information regarding power consumption, and the like.

In this case, information regarding multiple interface support refers to information regarding other systems supported by a handover target network. For example, when a base station (AR 5) in a non-3GPP network supports not only one system (e.g., WiMAX) but also other system (another WLAN system or the like), if the terminal device 2 can accommodate the plurality of systems, the plurality of systems can be used simultaneously. In such a case, if only one system can be used in the handover target network (non-3GPP network) despite the terminal device 2 being notified in advance that "multiple systems usable", information to the effect that "multiple interface support: unavailable" (current status) is notified to the handover source network (3GPP network).

In addition, information regarding LBO support refers to an index indicating whether or not direct communication by a LBO (Local Breakout) is enabled. For example, when direct communication by LBO is not possible in the handover target network (non-3GPP network) despite the terminal device 2 being notified in advance that "LBO support available", information to the effect that "LBO support: unavailable" (current status) is notified to the handover source network (3GPP network).

Furthermore, information regarding availability of a specific IMS service indicates the availability of an IMS service at the handover target network (non-3GPP network). IMS services include an MBMS service, a Push to Talk service, a realtime service, and the like. For example, when no IMS services are supported in the handover target network (non-3GPP network) despite the terminal device 2 being notified in advance that "IMS service available", information to the effect that "IMS service: unavailable" (current status) is notified to the handover source network (3GPP network).

Moreover, information regarding power consumption refers to information on power consumption by the handover target network (non-3GPP network). Generally, in a network, when the terminal device 2 is not required to perform transmission/reception in order to reduce consumed power by the terminal device 2, power consumed by the terminal device 2 is reduced by temporarily disabling transmission/reception by the terminal device 2. When the setting of the network is somewhat inappropriate, even if terminal devices 2 are receiving the same service, a significant difference in consumed power may occur between networks. In such a case, for example, when a handover of the terminal device 2 is performed, a state of consumed power such as an increase in power consumption occurring despite receiving the same service at the same quality (for example, power consumption reaching 10%/second) can be reported to the handover source network.

Furthermore, when it is difficult to maintain the exact same quality between networks, power consumption can be notified together with other communication quality information so as to have the network side make a comprehensive judgment. In addition, an index such as enabling a determination of same quality if the quality are within a certain range can be set in advance. Furthermore, an emergency flag may be provided such as necessitating a move to a system having a battery due to low remaining power.

In this manner, a part of or all of the contents illustrated in Figure 10 may be notified to the terminal, whereby the terminal may be instructed to file a report on such contents. Moreover, a combined usage of RRC and NAS is also conceivable such as managing QoS-related information as RRC information and managing a specific IMS service as NAS information. In this case, for example, an RRC message is to be transmitted when the QoS related information falls below a threshold and an NAS message is to be transmitted when a specific IMS service is not provided.

### (Third Embodiment)

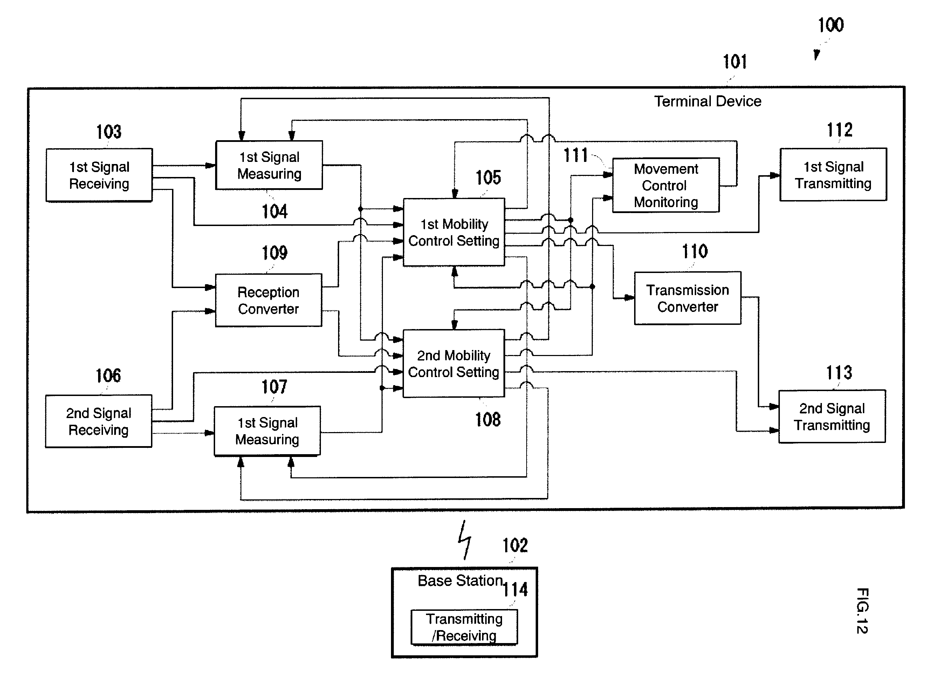

Next, a communication system according to a third embodiment of the present invention will now be described with reference to Figures 12 to 14. While the first and second embodiments are characterized by operations performed when a terminal device is in communication (also referred to as call connected, an active state, or when connected to an LTE system, referred to as an RRC_CONNECTED state), the present embodiment is characterized by operations when a terminal device is on standby (also referred to as an idle state, or when connected to an LTE system, referred to as an RRC_IDLE state). Hereafter, a communication system according to the present embodiment will be described, with a focus on such characteristics (points in which the present embodiment differs from the first and second embodiments).

First, with reference to Figure 12, configurations of a terminal device 101 and a base station 102 used in a communication system 100 according to the present embodiment will be described. As illustrated in Figure 12, the terminal device 101 includes a first signal receiving unit 103, a first signal measuring unit 104, and a first mobility control setting unit 105. In addition, the terminal device 101 includes a second signal receiving unit 106, a second signal measuring unit 107, and a second mobility control setting unit 108. Furthermore, the terminal device 101 includes a reception converter unit 109, a transmission converter unit 110, a mobility control monitoring unit 111, a first signal transmitting unit 112, and a second signal transmitting unit 113.

The first signal receiving unit 103 receives a signal transmitted from the base station 102 of a first network and outputs broadcast information included in the signal from the first network to the first mobility control setting unit 105. In addition, the first signal receiving unit outputs a reception signal for quality measurement to the first signal measuring unit 104.

The second signal receiving unit 106 receives a signal transmitted from the base station 102 of a second network and outputs broadcast information included in the signal from the second network to the second mobility control setting unit 108. In addition, the second signal receiving unit 106 outputs a reception signal for quality measurement to the second signal measuring unit 107.

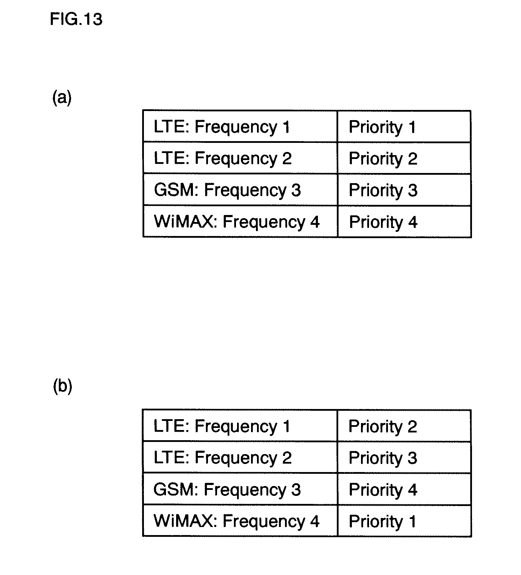

Broadcast information will now be described with reference to Figure 13. Broadcast information (in 3GPP, also referred to as system information or BCCH (Broadcast Control Channel)) is information for announcing control information shared by all terminal devices 101 and is announced to all cells.

Figure 13 illustrates an example of broadcast information to be transmitted from the base station 102 of the first network. As illustrated in Figure 13, broadcast information includes priority information indicating criteria of cell selection from the first network. The priority is set for each RAT. For example, Figure 13(a) illustrates an example in which the priority of LTE is high, while Figure 13(b) illustrates an example in which the priority of WiMAX is high. Therefore, when broadcast information such as that illustrated in Figure 13(a) is received, control that preferentially selects an LTE cell is performed, and when broadcast information such as that illustrated in Figure 13(b) is received, control that preferentially selects a WiMAX cell is performed.

The first signal measuring unit 104 receives setting information from the first mobility control setting unit 105 or the second mobility control setting unit 108 and measures the signal from the first network according to the settings. In addition, the second signal measuring unit 107 receives setting information from the first mobility control setting unit 105 or the second mobility control setting unit 108 and measures the signal from the second network according to the settings. Basically, since a terminal performs control using broadcast information being transmitted in a network in which the terminal is currently standing by, when the terminal is in an idle state in the first network, the first signal measuring unit 104 and the second signal measuring unit 107 perform measurement under an instruction from the first mobility control setting unit 105, and when the terminal is in an idle state in the second network, the first signal measuring unit 104 and the second signal measuring unit 107 perform measurement under an instruction from the second mobility control setting unit 108.

The first mobility control setting unit 105 performs control of a cell selection operation during an idle period in the first network based on broadcast information received from the first signal receiving unit 103. Specifically, a cell selection operation during an idle period is decided and a cell selection is decided. Based on the determination result, the first mobility control setting unit 105 issues a measurement instruction to the first signal measuring unit 104 and the second signal measuring unit 107, and notifies criteria for a validity determination of measurement/cell selection, which is a feature of the present invention, and a measurement result to the mobility control monitoring unit 111. When a move to the second network is decided, the first mobility control setting unit 105 notifies the information to the second mobility control setting unit 108 and the mobility control monitoring unit 111. In addition, when receiving a notification such as a result of a cell selection validity determination from the mobility control monitoring unit 111, the first mobility control setting unit 105 creates a message to be reported to the first network or the second network and outputs the message to the first signal transmitting unit 112 or the second signal transmitting unit 113. Furthermore, the first mobility control setting unit 105 also has functions for creating and processing messages for performing call connection, mobility control, and the like with respect to the first network.

The second mobility control setting unit 108 performs control of a cell selection operation during an idle period in the second network based on broadcast information received from the second signal receiving unit 106. Specifically, a cell selection operation during an idle period is decided and a cell selection is decided. Based on the determination result, the second mobility control setting unit 108 issues a measurement instruction to the first signal measuring unit 104 and the second signal measuring unit 107. When a move to the first network is decided, the second mobility control setting unit 108 notifies the information to the second mobility control setting unit 105 and the mobility control monitoring unit 111. Furthermore, the second mobility control setting unit 108 also has functions for creating and processing messages for performing call connection, mobility control, and the like with respect to the second network.

Control of a cell selection operation will now be described in greater detail. As described earlier, cell selection criteria information that indicates criteria for cell selection includes priority information. The priority information is information indicating which system is to be prioritized. For example, if where are two systems, A and B, and the system A has a higher priority, the terminal device 101 performs processing so that the system A is detected and selected as much as possible. In addition, cell selection criteria information includes information on a minimum reception level when selecting other system. When a measurement result of the other system satisfies the minimum reception level, the terminal device 101 can select a cell thereof.

Cell selection criteria information includes information on a reception level (measurement initiation reception level) of a current cell on which a measurement of other system is to be initiated. When the reception level of the current cell is good and the priority of the system is high, power consumption by the terminal device 101 can be reduced by avoiding measuring other system. On the other hand, when the reception level of the current cell is bad or the priority of the system is low, other system is to be measured. The measurement initiation reception level is a threshold (also referred to as S Search) for initiating a measurement of other system, and is generally set for each system. In addition, cell selection criteria information includes measurement method information (referred to as measurement quality). Since a plurality of cell quality determination methods exist, the measurement method information notifies which method is to be used. Using cell selection criteria information such as described above, the terminal device 101 determines which system is to be selected.

When the signal received at the first signal receiving unit 103 is a signal to be used by the second mobility control setting unit 108, the reception converter unit 109 performs processing for converting the format of the signal. When the signal received at the second signal receiving unit 106 is a signal to be used by the first mobility control setting unit 105, the reception converter unit 109 performs processing for converting the format of the signal.

The mobility control monitoring unit 111 determines whether or not a measurement or a cell selection is valid. Validity determination will now be described in detail using a specific example. When determining the validity of a measurement, a determination is made on whether or not other system has been detected within a specific period of time as a result of the terminal device 101 performing the measurement. When other system is not detected, a report is made to the base station 102 of the first network. In addition, a validity determination of a cell selection is performed based on how many times the terminal device 101 had performed cell selection between different systems within a specific period of time. When the number of cell selections exceeds a predetermined threshold, a report is made to the base station 102 of the first network. When the number of cell selections equals or falls below the predetermined threshold, a report is not made to the base station 102 of the first network.

When the signal generated at the first mobility control setting unit 105 is a signal to be transmitted from the second signal transmitting unit 113, the transmission converter unit 110 performs processing for converting the format of the signal. When the signal generated at the second mobility control setting unit 108 is a signal to be transmitted from the first signal transmitting unit 112, the transmission converter unit 110 performs processing for converting the format of the signal.

The first signal transmitting unit 112 transmits a message to the base station 102 of the first network and the second signal transmitting unit 113 transmits a message to the base station 102 of the second network.

Next, a configuration of the base station 102 of the first and second networks will be described. As illustrated in Figure 12, the base station 102 of the first and second networks includes a transmitting/receiving unit 114 that transmits/receives information regarding cell selection to/from the terminal device 101.

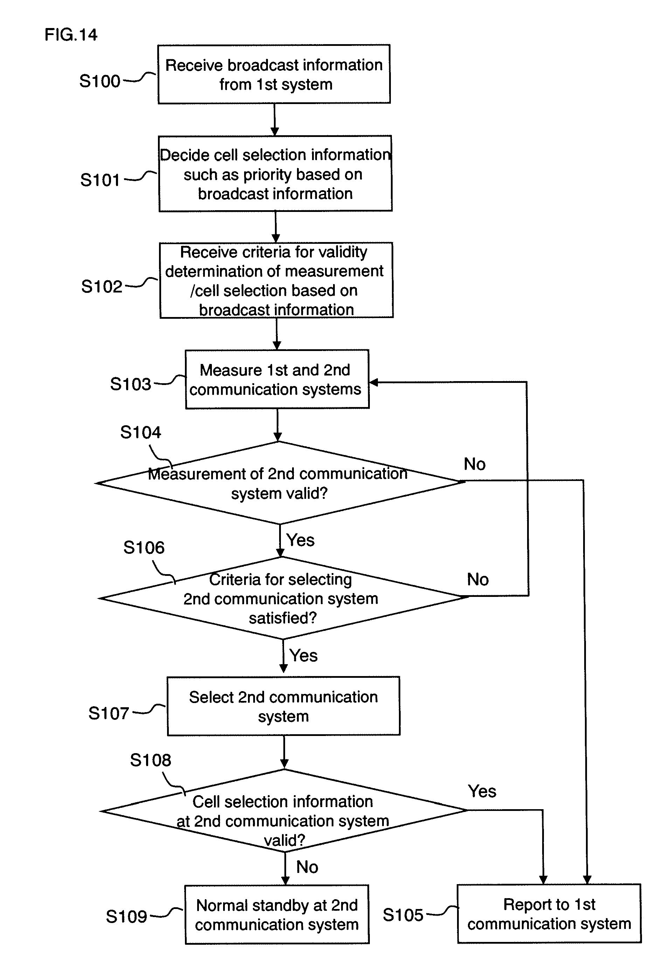

Operations of the communication system 100 according to the present embodiment configured as described above will be described with reference to Figure 14. A cell selection operation of the terminal device 101 during an idle period in the first network will now be described.

Figure 14 is a flow diagram illustrating a flow of control of cell selection (also referred to as cell reselection) according to the present embodiment. First, the terminal device 101 receives broadcast information from a system that is currently on standby (in this case, the first network) (S100). The broadcast information is sent from the first signal receiving unit 103 to the first mobility control setting unit 105. In this manner, the terminal device 101 acquires information to be used for a cell selection during idle (information for determining the validity of measurement of a different system and the validity of a cell selection operation).

Based on the broadcast information received from the first network, the terminal device 101 decides information to become criteria for cell selection (cell selection criteria information) (S101). This processing is executed by the first mobility control setting unit 105. The cell selection criteria information (information for cell selection) includes information for measurement, and the first mobility control setting unit 105 issues an instruction for measurement to the first signal measuring unit 104 and the second signal measuring unit 107. In addition, the first mobility control setting unit 105 notifies the mobility control monitoring unit 111 of criteria for determining the validity of measurement of a different system and the validity of a cell selection operation.

When performing a measurement or a selection of a communication system of other system, the terminal device 101 receives criteria for determining whether such measurement or selection is valid or not (S102). In the present embodiment, criteria thereof is set using the broadcast information. Alternatively, the criteria may be set individually (for each terminal device 101) without using broadcast information. This processing (processing of setting criteria for determining the validity of measurement of a different system and the validity of a cell selection operation) is performed by the mobility control monitoring unit 111.

At the terminal device 101, measurements of the first and second communication systems are performed based on criteria (decided measurement object system, measurement method, and the like) set as described above (S103). As for a specific operation of deciding a measurement object system, when there exists a system with a higher priority than a system currently selected by the terminal device 101, the other system is to be measured. In addition, even when the currently selected system has the highest priority, if the quality of the current system is bad, an operation such as searching for other system is performed. A measurement process such as described above is performed at the first signal measuring unit 104 and the second signal measuring unit 107 as set in the step described above. A measurement result thereof is outputted as needed to the first mobility control setting unit 105 to be used to perform a cell selection process at the mobility control setting unit 105.

Next, the terminal device 101 determines whether or not a measurement of a communication system of other system is valid (S104). This determination is made by the mobility control monitoring unit 111 based on a response from the first mobility control setting unit 105. Specifically, when cell detection is not notified by the second signal measuring unit 107 despite having the second signal measuring unit 107 measure other system, the measurement is determined to be invalid.

When determined to be invalid, a notification is made to the first mobility control setting unit 105 and the first mobility control setting unit 105 creates a report message. The created report message is outputted to the first signal transmitting unit 112 and subsequently transmitted to the first network (S105). In this manner, the terminal device 101 files a report to the first communication system.

When determined to be valid, a determination is made on whether or not criteria for selecting the second communication system are satisfied (S106). Specifically, a determination is made on whether or not conditions for selecting a system other than the currently-selected system are satisfied as a result of performing measurements of the first and second communication systems described above. The determination is performed as a part of a normal idle-period cell selection operation at the first mobility control setting unit 105. As a result, when it is determined that criteria for performing a cell selection of the second communication system are not met, measurements of the first and second communication systems are once again performed (S103).

On the other hand, when it is determined that criteria for performing a cell selection of the second communication system are met, the other system (in this case, the second communication system) is selected (S107). In this case, a determination result to the effect that criteria for performing a cell selection of the second communication system are met is notified to the second mobility control setting unit 108 and the mobility control monitoring unit 111.

Next, the terminal device 101 determines whether or not a cell selection to other system is valid (S108).
The determination is performed at the mobility control setting unit. For example, a judgment is made on whether or not the number of cell selections made to a different system in a predetermined period of time equals or exceeds a predetermined number. As a result, when the number of cell selections performed equals or exceeds a predetermined number, cell selection is determined to be invalid, and when the number of cell selections performed does not equal or exceed a predetermined number, cell selection is determined to be valid. In this case, the mobility control setting unit continuously counts the number of cell selections. The count is retained even when a cell selection is made to a different system. In addition, rules for determining the number of cell selections and the validity of measurement are set only at the first mobility control setting unit 105.

As a result of the determinations described above, when it is determined that a cell selection is invalid, a report is filed to the first communication system (S105). On the other hand, when it is determined that the cell selection is valid, processing such as broadcast information reception is performed at the other system (in this case, the second communication system), and idle-period operations such as a cell selection is performed using the value of the broadcast information (S109). In other words, the terminal device 101 makes a transition to an idle state in the second communication system. Processing of standby operations in the idle state (reception of broadcast information from the second communication system and the like) is performed at the second mobility control setting unit 108.

With a communication system according to the third embodiment of the present invention such as described above, the base station 102 of the first network is capable of grasping the validity of cell selection criteria information (priority or the like) of the first network from a report message to be transmitted from the terminal device 101. Consequently, appropriate communication control that takes the validity of cell selection criteria information (priority or the like) of the first network into consideration can be performed.

With a conventional communication system, problems attributable to an inconsistency in broadcast information may arise when the terminal device 101 performs a cell selection between different systems. For example, with a cell selection between different systems from a 3GPP network to a non-3GPP network, there may be cases where broadcast information in a 3GPP managed by an operator and broadcast information transmitted in a different system are not perfectly consistent. A specific example is a case where control is performed in the 3GPP system so as to prioritize the non-3GPP system and the non-3GPP system is set so as to prioritize the 3GPP system. In such a case, with a conventional communication systems, the terminal device 101 inadvertently moves back and forth between the 3GPP system and the non-3GPP system.

In addition, with a conventional communication system, there may be cases where measurement of the non-3GPP system is unnecessarily prioritized even when there is no inconsistency among broadcast information such as described above. For example, in the example illustrated in Figure 4, a non-3GPP only exists in a portion of the 3GPP area. In such a state, when the non-3GPP is set so as to be prioritized, the terminal device 101 ends up continuously performing measurement to the non-3GPP even when not located inside the non-3GPP area. As a result, power consumption by the terminal device 101 problematically increases.

With the communication system 100 according to the present embodiment, the terminal device 101 evaluates the validity of measurement, the validity of cell selection and the like, and when invalid, files a report to the network. As a result, the network can subsequently update setting information depending on the situation.

In the present embodiment, while a case has been illustrated in which the terminal device 101 detects both the validity of measurement of a different system and the validity of a cell selection operation, the scope of the present invention is not limited thereto and a determination of validity of either one can be performed instead.

In addition, in the present embodiment, while an example has been described in which determination criteria of the validity of measurement of a different system and the validity of a cell selection operation are notified using broadcast information, the scope of the present invention is not limited thereto. For example, the information can also be notified as individual control information when the terminal device 101 is in an active state. Such processing enables processing to be performed only by a specific terminal device 101.

Furthermore, in the present embodiment, while an example has been described in which a report is filed when the determination criteria of the validity of measurement of a different system and the validity of a cell selection operation are exceeded, the result may alternatively be arranged to be reported when the terminal device 101 next enters an active state. In addition, processing such as setting a two-stage threshold as the determination criteria can also be adopted, whereby a report is filed when next entering an active state if only a lower threshold is exceeded, and a report is filed immediately when an upper threshold is exceeded.

Moreover, while only a case of performing a cell selection from a first system to a second system has been illustrated in the present embodiment, it is obvious that cell selections may be counted when performing cell selections from the second system to the first system.

In addition, in the present embodiment, an example has been presented in which the first system manages determination of measurement validity and the validity of a cell selection operation while the second system does not independently perform management. However, the second system can also independently undertake determination of measurement validity and the validity of a cell selection operation.

Furthermore, in the present embodiment, there is a plurality of conceivable operations when performing a cell movement in the first system. As first means, since new broadcast information is received when a cell movement is performed in the first system, information such as the number of previous cell selections is to be reset. As second means, when performing a cell movement in the first system and receiving broadcast information from a new cell, the broadcast information is verified against previous broadcast information, whereby the broadcast information is reset when settings regarding validity determination differs and is not reset when such settings are the same. Furthermore, as third means, in addition to the operation of the first or second means, resetting is varied depending on the method of determining validity. For example, not resetting information which can be continuously used such as the number of previous cell selections and resetting information such as the validity of a measurement by a terminal.

### (Fourth Embodiment)

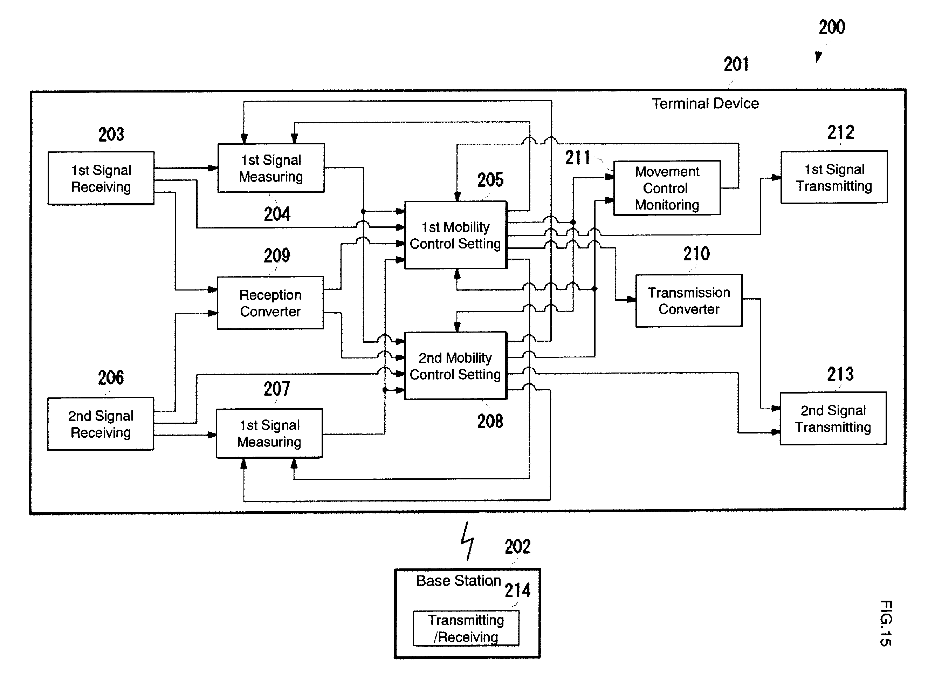

Next, a communication system according to a fourth embodiment of the present invention will now be described with reference to Figures 15 to 17. While the third embodiment is characterized by operations of a terminal device during a cell selection to the second communication system, the present embodiment is characterized by operations of a terminal device after a cell selection to the second communication system. Hereafter, a communication system according to the present embodiment will be described, with a focus on such characteristics (points in which the present embodiment differs from the third embodiment).

First, with reference to Figure 15, configurations of a terminal device 201 and a base station 202 used in a communication system 200 according to the present embodiment will be described. Here, points that differ from the third embodiment will be described. In other words, unless particular reference is made, a configuration of the communication system 200 according to the present embodiment are the same as that of the third embodiment.

As illustrated in Figure 15, the terminal device 201 includes a first signal receiving unit 203, a first signal measuring unit 204, and a first mobility control setting unit 205. In addition, the terminal device 201 includes a second signal receiving unit 206, a second signal measuring unit 207, and a second mobility control setting unit 208. Furthermore, the terminal device 201 includes a reception converter unit 209, a transmission converter unit 210, a mobility control monitoring unit 211, a first signal transmitting unit 212, and a second signal transmitting unit 213. In addition, base stations 202 of the first and second networks include a transmitting/receiving unit 214.

The first mobility control setting unit 205 according to the present embodiment includes a function for sending broadcast information received from the second signal receiving unit 206 to the mobility control monitoring unit 211 in the second network. In addition, the mobility control monitoring unit 211 includes a function for determining the validity of a cell selection to the second network based on broadcast information received from the first mobility control setting unit 205.

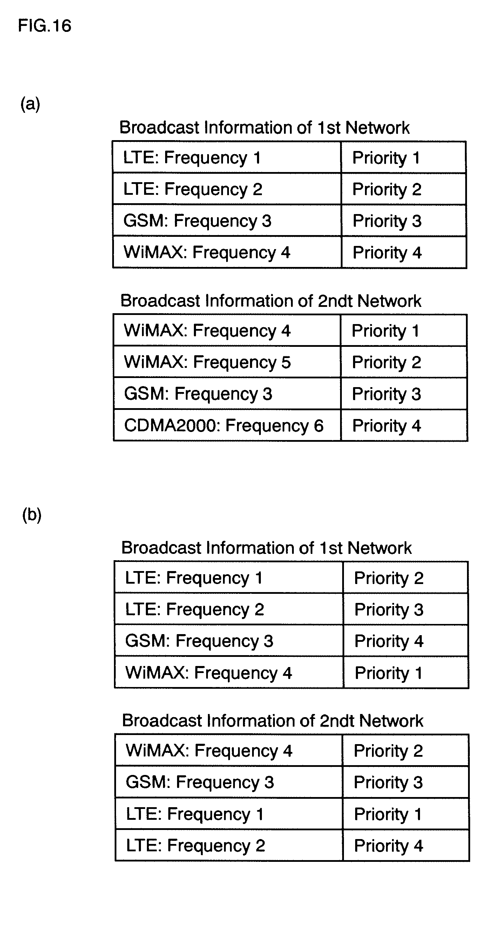

Determination of the validity of a cell selection to the second network will now be described with reference to Figure 16. Figure 16 is a diagram showing an example of broadcast information in a first network (e.g., LTE) and a second network (e.g., WiMAX).

Figure 16(a) is an example in which a system of the first network (LTE) is not included in broadcast information of a cell selection destination system. In such a case, after moving from the first network (LTE) to the second network (WiMAX), the terminal device 201 becomes unable to return to the original network (LTE). In this case, a cell selection from the second communication system to the first communication system is being inhibited and a cell selection to the second network is determined to be invalid.

Figure 16(b) is an example in which priorities of broadcast information are inconsistent between the first network (LTE) and the second network (WiMAX) and ping-pong is likely to occur between the first network (LTE) and the second network (WiMAX). In this case, the second network (WiMAX) is prioritized in the first network (LTE), making it easier to move to the second network (WiMAX). Conversely, the first network (LTE) is prioritized in the second network (WiMAX), making it easier to return to the first network (LTE). In such a case, ping-pong between the first network and the second network is likely to occur and a determination is made in that a cell selection to the second network is invalid.

When conditions such as described above are detected or, in other words, when it is determined that a cell selection to the second network is invalid, a report message is transmitted from the terminal device 201 to the first network.

Moreover, while a case where a priority included in broadcast information is inappropriate has been illustrated in Figure 16, the scope of the present invention is not limited thereto and cases where other information is inappropriate are to be handled in a similar manner. For example, information on whether or not MBMS is provided in the second network corresponds to this case. In other words, when MBMS is not provided in the second network, it is determined that a cell selection to the second network is invalid.

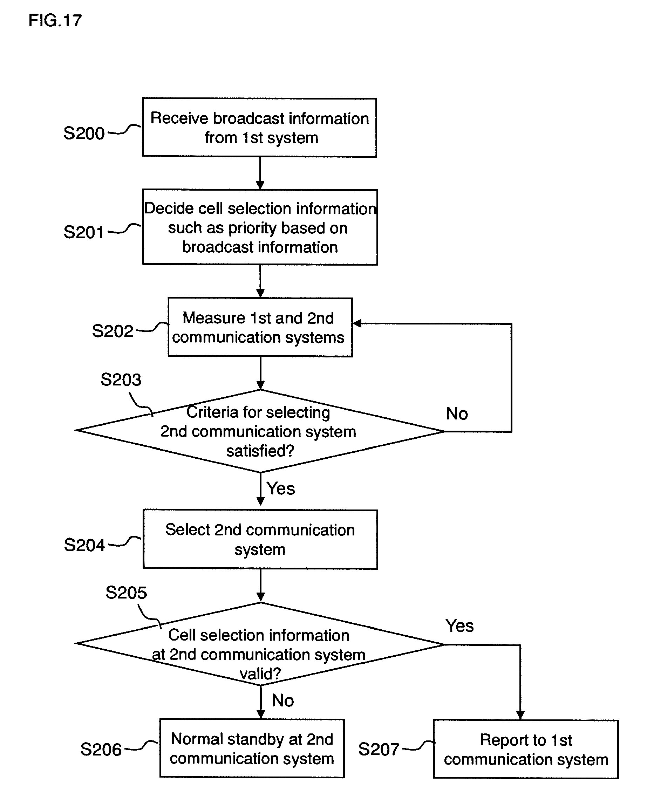

Operations of the communication system 200 according to the present embodiment configured such as described above will be described with reference to Figure 17. A description will now be given, with a focus on operations by the terminal device 201 after a cell selection to the second network.

Figure 17 is a flow diagram illustrating a flow of cell selection control according to the present embodiment. First, the terminal device 201 receives broadcast information from a system that is currently on standby (in this case, the first network) (S200).

Next, based on broadcast information from the first network, the terminal device 201 decides on information for determining whether or not information for the terminal device 201 that is in an idle state in the second communication system (broadcast information from the second network) is valid (S201). In other words, the present embodiment differs from the third embodiment in that instead of information for determining whether or not a measurement or a cell selection with respect to the second communication system is valid, information for determining whether information for the terminal device 201 in an idle state in the second communication system is to be handled by the terminal device 201.

Next, at the terminal device 201, measurements of the first and second communication systems are performed based on criteria (decided measurement object system, measurement method, and the like) set based on broadcast information from the first network (S202).

Next, a determination is made on whether or not criteria for selecting the second communication system are satisfied (S203). As a result, when it is determined that criteria for a cell selection of the second communication system are not met, measurements of the first and second communication systems are once again performed (S202). On the other hand, when it is determined that criteria for a cell selection of the second communication system are met, the other system (in this case, the second communication system) is selected (S204).

Subsequently, the terminal device 201 confirms information for cell selection (cell selection criteria information) included in the broadcast information of the second communication system and determines whether or not the cell selection criteria information is valid (S205). In this case, based on information set in step 201, a determination is made on whether or not information for the terminal device 201 in an idle state in the second communication system is valid (refer to Figure 16).

As a result, when it is determined that the cell selection to the second network is valid, processing such as broadcast information reception is performed at the other system (in this case, the second communication system), and idle-period operations such as a cell selection is performed using the value of the broadcast information (S206). On the other hand, when it is determined that a cell selection to the second network is invalid, a report is filed to the first communication system (S207).

With the communication system 200 according to the fourth embodiment of the present invention such as described above, the base station 202 of the first network is capable of grasping the validity of cell selection criteria information (priority or the like) of the second network from a report message to be transmitted from the terminal device 201. Consequently, appropriate communication control that takes the validity of cell selection criteria information (priority or the like) of the second network into consideration can be performed at the base station 202 of the first network.

In a conventional communication system, after performing a cell selection of the second communication system, the terminal device 201 operates as instructed by the communication system. However, cases are conceivable such as where the setting of the second communication system differs from what is desired by an operator managing the first communication system. Specifically, as illustrated in Figure 16, there may be a case where information on the first communication system is not distributed in the second communication system, thereby making it difficult to perform a cell selection from the second communication system to the first communication system, or a case where a service (e.g., MBMS) provided in the first communication system is not provided in the second communication system.

Even in such cases, with the communication system 200 according to the present embodiment, the first communication system is capable of grasping the validity of cell selection criteria information of the second communication system from a report message to be transmitted from the terminal device 201. As a result, the first communication system can perform appropriate communication control while taking the validity of cell selection criteria information of the second communication system into consideration.

### (Fifth Embodiment)

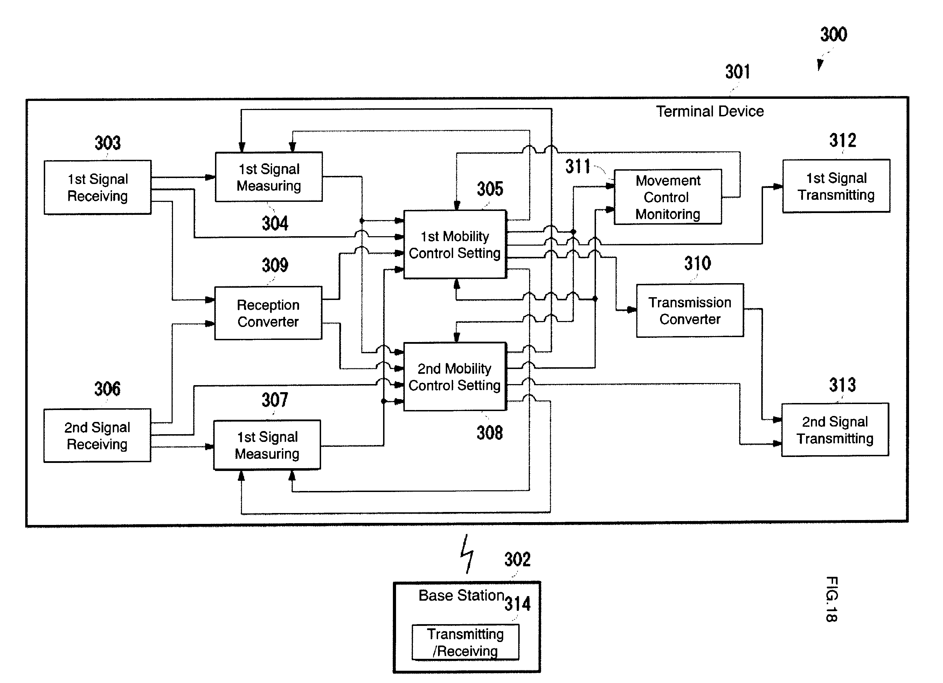

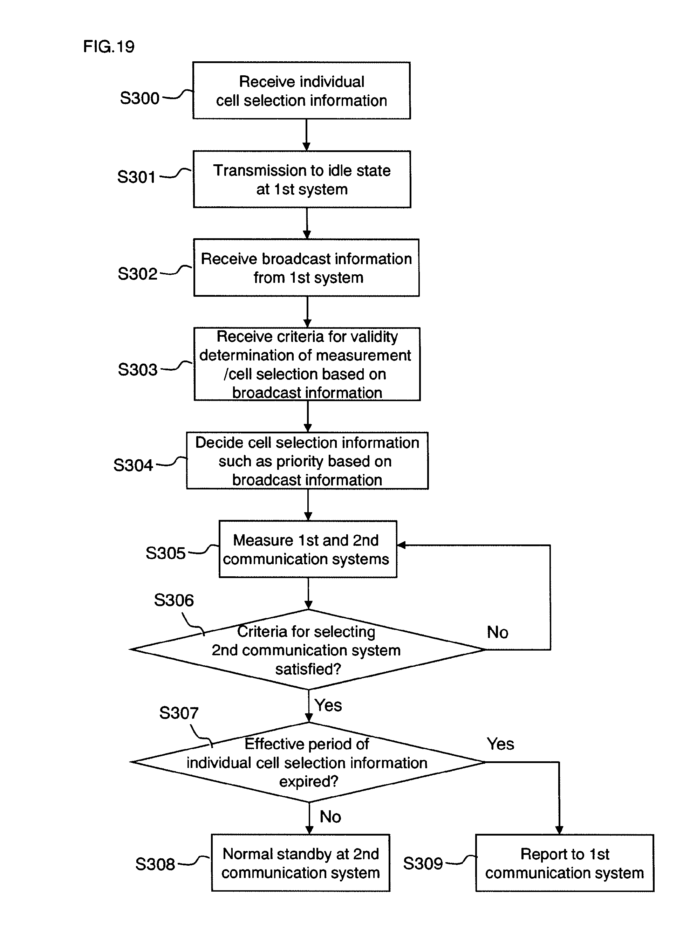

Next, a communication system according to a fifth embodiment of the present invention will now be described with reference to Figures 18 and 19. While criteria when a terminal device performs a cell selection are set based on broadcast information in the third embodiment, in the present embodiment, criteria are set individually (for each terminal device) without using broadcast information. Consequently, it is now possible to have each terminal device select a different frequency and system.

Priority information is used as a representative example of such information on individual criteria. Individual priority information is notified to each terminal device during a transition of a terminal device to an idle state after entering an active state. In addition, the individual priority information can include information on an effective period. Hereafter, a communication system according to the present embodiment will be described using as an example a case where information on an individually-assigned priority (a priority when moving to a different system) is used.

First, with reference to Figure 18, configurations of a terminal device 301 and a base station 302 used in a communication system 300 according to the present embodiment will be described. Here, points that differ from the third embodiment will be described. In other words, unless particular reference is made, a configuration of the communication system 300 according to the present embodiment are the same as that of the third embodiment.

As illustrated in Figure 18, the terminal device 301 includes a first signal receiving unit 303, a first signal measuring unit 304, and a first mobility control setting unit 305. In addition, the terminal device 301 includes a second signal receiving unit 306, a second signal measuring unit 307, and a second mobility control setting unit 308. Furthermore, the terminal device 301 includes a reception converter unit 309, a transmission converter unit 310, a timer monitoring unit 311, a first signal transmitting unit 312, and a second signal transmitting unit 313. In addition, base stations 302 of the first and second networks include a transmitting/receiving unit 314.

The first mobility control setting unit 305 according to the present embodiment notifies information on an effective period (a timer state) of priority information received from the first signal receiving unit 303 to the timer monitoring unit 311 when performing a cell selection to a different system. In addition, the timer monitoring unit 311 includes a function for managing a timer when the terminal device 301 is in an idle state in a different system. Specifically, a function is provided for notifying the first mobility control setting unit 305 when the timer expires. In other words, while the timer is managed by the first mobility control setting unit 305 when an idle state is entered in the first network, management is taken over by the timer monitoring unit 311 when a cell selection to the second network is performed.

Operations of the communication system 300 according to the present embodiment configured as described above will be described with reference to Figure 19. A description will now be given, with a focus on timer control operations after a cell selection to the second network.

Figure 19 is a flow diagram illustrating a flow of timer control operations according to the present embodiment. First, the terminal device 301 receives individual cell selection criteria information from the first communication system (S300). In this case, information on an effective period is received in addition to priority information. A transition is then made to an idle state in the first system (S301).

Subsequently, the terminal device 301 receives broadcast information from a system currently on standby (in this case, the first network) (S302), and when performing a measurement or a selection of a communication system of other system, receives criteria for determining whether or not such measurement or selection is valid (S303).

Next, the terminal device 301 decides information to be used as cell selection criteria (cell selection criteria information) based on broadcast information received from the first network (S304), and measures the first and second communication systems based on criteria (decided measurement object system, measurement method, and the like) set as described above (S305).

A determination is then made on whether or not criteria for selecting the second communication system are satisfied (S306). As a result, when it is determined that criteria for cell selection of the second communication system are not met, measurements of the first and second communication systems are once again performed (S305). On the other hand, when it is determined that criteria for cell selection of the second communication system are met, the other system (in this case, the second communication system) is selected.

Subsequently, at the terminal device 301, a determination is made on whether or not the priority effective period notified by the first communication system in step 300 has expired (S307), and when it is determined that the effective period has not expired, processing such as reception of broadcast information is performed at the other system (in this case, the second communication system) and idle-period operations such as a cell selection is performed using the value of the broadcast information (S308). On the other hand, when it is determined that the effective period has expired, a report is filed to the first communication system (S309).

With the communication system 300 according to the fifth embodiment of the present invention described above, the base station 302 of the first network is capable of knowing that a time limit for a temporary cell selection to the second network has expired from a report message to be transmitted from the terminal device 301. Consequently, appropriate communication control after expiration of the time limit for temporary cell selection to the second network can be performed at the base station 302 of the first network.

In a conventional communication system, after the terminal device 301 selects the second communication system, cell selection processing is performed based on information on the second communication system. However, when moving to the second communication system using priority information that has an effective period, it is conceivable that a move to another first communication system or other system is desirably made after the effective period expires. Nevertheless, conventional communication systems have offered no countermeasures to such situations.

With the communication system 300 according to the present embodiment, upon expiration of an effective period, the terminal device 301 notifies the original network (the first network having notified individual cell selection information) that the effective period has expired.

Due to such an operation, even when the terminal device 301 moves to a different system (second communication system), having the terminal device 301 access the original system (first communication system) upon expiration of the effective period of the priority information notified by the original system enables processing such as once again receiving appropriate cell selection information or once again moving.

The first system having been notified the information from the terminal device 301 is capable of notifying the terminal device 301 as to which system to connect to or once again transmitting priority information.

For example, when the terminal device 301 is notified as to which system to connect to, the terminal device 301 confirms whether the notified system is detectable and satisfies conditions for standby. When the conditions are satisfied, a decision is made to move to the system.

In addition, when priority information is once again transmitted to the terminal device 301, the terminal device 301 confirms which system to reconnect to based on the priority. Specifically, let us consider a case where, when the information set prior to expiration of the effective period involves prioritizing WiMAX, a move to WiMAX is made despite standby being enabled in LTE. In this case, when the priority most recently notified involves prioritizing LTE, a cell selection is made at this point so as to stand by for LTE.

While an example of an operation by the terminal device 301 for filing a report to the original system upon timer expiration has been described above, the scope of the present invention is not limited thereto. For example, the terminal device 301 may once again execute a cell selection using cell selection information transmitted upon timer expiration in the first communication system. Consequently, power consumption by the terminal device 301 can be reduced.

In addition, in order to enable easier determination as to which system the terminal device 301 is to connect to, information regarding which system to connect to or information other than priority information such as cell information that is sent in broadcast information may be sent.

Although further embodiments of the present invention have been described above by way of example, the scope of the present invention is not limited thereto and may be altered and modified depending on the intended use within the scope set forth in the claims.

A communication system according to the present invention is a communication system in which, in a network environment having a first network and a second network contained in a communication area of the first network and whose communication protocol differs from that of the first network, a handover of a terminal device is performed between a base station of the first network and a base station of the second network, wherein the communication system is configured such that: the base station of the first network includes a handover control unit that controls a handover to the base station of the second network regarding a terminal device having moved into a communication area of the second network; and the terminal device includes an information acquiring unit for acquiring communication quality information regarding the communication quality of the second network in response to the handover to the base station of the second network, and an information transmitting unit that transmits the communication quality information to the base station of the first network via an interface provided between the first network and the second network, with the base station of the second network acting as a relay, in order to control the handover to the base station of the second network.

According to such a configuration, even after a handover from the first network to the second network is performed and base stations are switched, communication quality information of the second network (target network) is transmitted to the base station of the first network (source network) via the interface provided between the first network and the second network, with the base station of the second network acting as a relay. As a result, the first network (source network) is able to grasp the state of communication quality of the second network (target network). In addition, the first network (source network) is able to appropriately control a handover to the second network (target network) while taking the state of communication quality of the second network into consideration. Consequently, handover control that suppresses a reduction in communication quality is performed. For example, when the QoS of the second network (target network) is low, a handover to the low-QoS second network is to be suppressed or suspended. Furthermore, handover control is performed so as to return a terminal device that has been handed over to the low-QoS second network to the first network (source network).

In addition, the communication system according to the present invention may be configured such that the terminal device includes a transmission condition setting unit that sets a transmission condition to become criteria in determining whether or not communication quality information is to be transmitted.

According to such a configuration, a decision is made as to whether or not communication quality information is to be transmitted using set transmission conditions as criteria. The transmission conditions include, for example, a condition in which the QoS of the second network (target network) is equal to or lower than a predetermined threshold. In this case, communication quality information is transmitted when the QoS of the second network (target network) is equal to or lower than the predetermined threshold. Accordingly, transmission of communication quality information is performed in an appropriate manner.

In addition, the communication system according to the present invention may be configured such that the base station of the first network or the base station of the second network includes a condition transmitting unit that transmits transmission condition information regarding a transmission condition to the terminal device when initiating communication with the terminal device or when performing a handover to the base station of the second network, and the transmission condition setting unit sets a transmission condition based on transmission condition information received from the base station of the first network.

According to such a configuration, a transmission condition is sent from the base station of the first or second network to the terminal device when initiating communication with the terminal device or during a handover and a transmission condition is set at an appropriate timing.

Furthermore, in the communication system according to the present invention, the handover control unit may be configured so as to perform a handover to return the terminal device handed over to the base station of the second network to the base station of the first network based on communication quality information transmitted from the terminal device.

According to such a configuration, handover control that suppresses a reduction in communication quality is performed. For example, handover control is performed so as to return a terminal device that has been handed over to a low-QoS second network to the first network (source network). In other words, even if the terminal device enters a communication area of the second network, when the QoS of the second network is low, a handover to return the terminal device to the first network is performed.

Moreover, in the communication system according to the present invention, the handover control unit may be configured so as to suppress or suspend a handover to the base station of the second network based on communication quality information transmitted from the terminal device.

According to such a configuration, handover control that suppresses a reduction in communication quality is performed. For example, when the QoS of the second network (target network) is low, a handover to the low-QoS second network is to be suppressed or suspended. In other words, even if the terminal device moves into the communication area of the second network, when the QoS of the second network is low, a handover to the second network is arranged so as not to be performed.

A terminal device according to the present invention is a terminal device for which, in a network environment having a first network and a second network contained in a communication area of the first network and whose communication protocol differs from that of the first network, a handover is performed between a base station of the first network and a base station of the second network, wherein the terminal device is configured so as to include: an information acquiring unit for acquiring communication quality information regarding the communication quality of the second network in response to the handover to the base station of the second network; and an information transmitting unit that transmits the communication quality information to the base station of the first network via an interface provided between the first network and the second network, with the base station of the second network acting as a relay, in order to control the handover to the base station of the second network.

According to such a configuration, in a similar manner to the communication system described above, even after a handover from the first network to the second network is performed and base stations are switched, communication quality information of the second network (target network) is transmitted to the base station of the first network (source network) via the interface provided between the first network and the second network, with the base station of the second network acting as a relay. Accordingly, the first network (source network) is able to grasp the state of communication quality of the second network (target network). In addition, the first network (source network) is able to appropriately control a handover to the second network (target network) while taking the state of communication quality of the second network into consideration. Consequently, handover control that suppresses a reduction in communication quality is performed.

A base station according to the present invention is a base station provided in a first network in a network environment having the first network and a second network contained in a communication area of the first network and whose communication protocol differs from that of the first network, wherein the base station is configured so as to include: a handover control unit that controls a handover to the base station of the second network regarding a terminal device having moved into a communication area of the second network; and an information receiving unit for receiving communication quality information regarding the communication quality of the second network transmitted from the terminal device via an interface provided between the first network and the second network, with the base station of the second network acting as a relay, in order to control the handover to the base station of the second network.

According to such a configuration, in a similar manner to the communication system described above, even after a handover from the first network to the second network is performed and base stations are switched, communication quality information of the second network (target network) is transmitted to the base station of the first network (source network) via the interface provided between the first network and the second network, with the base station of the second network acting as a relay. Accordingly, the first network (source network) is able to grasp the state of communication quality of the second network (target network). In addition, the first network (source network) is able to appropriately control a handover to the second network (target network) while taking the state of communication quality of the second network into consideration. Consequently, handover control that suppresses a reduction in communication quality is performed.

A communication quality management method according to the present invention is a method of managing communication quality when a handover of a terminal device is performed between a base station of a first network and a base station of a second network in a network environment having the first network and the second network contained in a communication area of the first network and whose communication protocol differs from that of the first network, the method including: acquiring communication quality information regarding the communication quality of the second network in response to the handover to the base station of the second network; and transmitting the communication quality information to the base station of the first network via an interface provided between the first network and the second network, with the base station of the second network acting as a relay, in order to control the handover to the base station of the second network.

According to this method, in a similar manner to the communication system described above, even after a handover from the first network to the second network is performed and base stations are switched, communication quality information of the second network (target network) is transmitted to the base station of the first network (source network) via the interface provided between the first network and the second network, with the base station of the second network acting as a relay. Accordingly, the first network (source network) is able to grasp the state of communication quality of the second network (target network). In addition, the first network (source network) is able to appropriately control a handover to the second network (target network) while taking the state of communication quality of the second network into consideration. Consequently, handover control that suppresses a reduction in communication quality is performed.

A program according to the present invention is a program for managing communication quality when a handover of a terminal device is performed between a base station of a first network and a base station of a second network in a network environment having the first network and the second network contained in a communication area of the first network and whose communication protocol differs from that of the first network, the program configured so as to cause a computer to execute: a process for acquiring communication quality information regarding the communication quality of the second network in response to the handover to the base station of the second network; and a process for transmitting the communication quality information to the base station of the first network via an interface provided between the first network and the second network, with the base station of the second network acting as a relay, in order to control the handover to the base station of the second network.

According to this program, in a similar manner to the communication system described above, even after a handover from the first network to the second network is performed and base stations are switched, communication quality information of the second network (target network) is transmitted to the base station of the first network (source network) via the interface provided between the first network and the second network, with the base station of the second network acting as a relay. Accordingly, the first network (source network) is able to grasp the state of communication quality of the second network (target network). In addition, the first network (source network) is able to appropriately control a handover to the second network (target network) while taking the state of communication quality of the second network into consideration. Consequently, handover control that suppresses a reduction in communication quality is performed.

A terminal device according to the present invention is a terminal device on which control is performed in an idle state in a first network in a network environment in which a cell selection from the first network to a second network is performed based on priorities set for each network, the terminal device configured so as to include: a receiving unit for receiving cell selection criteria information that is information describing criteria of cell selection from the first network and which includes priority information from the base station of the first network; a judging unit for judging a validity of cell selection from the first network based on a result of a cell selection attempted based on the cell selection criteria information; and a transmitting unit for transmitting a report message that reports a judgment result of the validity of cell selection to the base station of the first network.

According to such a configuration, the base station of the first network is capable of grasping the validity of cell selection criteria information (priority or the like) of the first network from a report message to be transmitted from the terminal device. Consequently, appropriate communication control that takes the validity of cell selection criteria information (priority or the like) of the first network into consideration can be performed.

A communication system according to the present invention is a communication system in which, in a network environment in which a cell selection from a first network to a second network is performed based on priorities set for each network, communication control is performed between a terminal device in an idle state in the first network and a base station of the first network, the communication system configured such that: the base station of the first network includes a transmitting/receiving unit for transmitting/receiving information regarding cell selection to/from the terminal device; and the terminal device includes a receiving unit for receiving cell selection criteria information that is information describing criteria of cell selection from the first network and which includes priority information from the base station of the first network, a judging unit for judging a validity of cell selection from the first network based on a result of a cell selection attempted based on the cell selection criteria information, and a transmitting unit for transmitting a report message that reports a judgment result of the validity of cell selection to the base station of the first network.

According to such a configuration, in the same manner as described above, the base station of the first network is capable of grasping the validity of cell selection criteria information (priority or the like) of the first network from a report message to be transmitted from the terminal device. Consequently, appropriate communication control that takes the validity of cell selection criteria information (priority or the like) of the first network into consideration can be performed.

A terminal device according to the present invention is a terminal device on which control is performed after a cell selection to a second network in a network environment in which a cell selection from a first network to the second network is performed based on priorities set for each network, the terminal device configured so as to include: a receiving unit for receiving cell selection criteria information that is information describing criteria of cell selection from the second network and which includes priority information from the base station of the second network; a judging unit for judging a validity of cell selection to the second network based on the cell selection criteria information; and a transmitting unit for transmitting a report message that reports a judgment result of the validity of cell selection to the base station of the first network.

According to such a configuration, the base station of the first network is capable of grasping the validity of cell selection criteria information (priority or the like) of the second network from a report message to be transmitted from the terminal device. Consequently, appropriate communication control that takes the validity of cell selection criteria information (priority or the like) of the second network into consideration can be performed at the base station of the first network.

A communication system according to the present invention is a communication system in which, in a network environment in which a cell selection from a first network to a second network is performed based on priorities set for each network, communication control is performed between a terminal device after a cell selection to the second network and a base station of the first network, the communication system configured such that: the base station of the first network and the base station of the second network include transmitting/receiving units for transmitting/receiving information regarding cell selection to/from the terminal device; and the terminal device includes a receiving unit for receiving cell selection criteria information that is information describing criteria of cell selection from the second network and which includes priority information from the base station of the second network, a judging unit for judging a validity of cell selection to the second network based on the cell selection criteria information, and a transmitting unit for transmitting a report message that reports a judgment result of the validity of cell selection to the base station of the first network.

According to such a configuration, in the same manner as described above, the base station of the first network is capable of grasping the validity of cell selection criteria information (priority or the like) of the second network from a report message to be transmitted from the terminal device. Consequently, appropriate communication control that takes the validity of cell selection criteria information (priority or the like) of the second network into consideration can be performed at the base station of the first network.

A terminal device according to the present invention is a terminal device on which control is performed after a temporary cell selection from a first network to a second network in a network environment in which a cell selection from the first network to the second network is performed based on priorities set for each network, the terminal device configured so as to include: a receiving unit for receiving cell selection criteria information that is information describing criteria of temporary cell selection from the first network and which includes fixed-term priority information from the base station of the first network; a judging unit for judging whether or not a temporary cell selection time limit has been exceeded based on the cell selection criteria information; and a transmitting unit for transmitting a report message reporting that the time limit has been exceeded to the base station of the first network when it is judged that the temporary cell selection time limit has been exceeded.

According to such a configuration, the base station of the first network is capable of knowing that a time limit for a temporary cell selection to the second network has expired from a report message to be transmitted from the terminal device. Consequently, appropriate communication control after expiration of the time limit for temporary cell selection to the second network can be performed at the base station of the first network.

A communication system according to the present invention is a communication system in which, in a network environment in which a cell selection from a first network to a second network is performed based on priorities set for each network, communication control is performed between a terminal device after a temporary cell selection to the second network and a base station of the first network, the communication system configured such that: the base station of the first network includes transmitting/receiving units for transmitting/receiving information regarding temporary cell selection to/from the terminal device; and the terminal device includes a receiving unit for receiving cell selection criteria information that is information describing criteria of temporary cell selection from the first network and which includes fixed-term priority information from the base station of the first network, a judging unit for judging whether or not a temporary cell selection time limit has been exceeded based on the cell selection criteria information, and a transmitting unit for transmitting a report message reporting that the time limit has been exceeded to the base station of the first network when it is judged that the temporary cell selection time limit has been exceeded.

According to such a configuration, in the same manner as described above, the base station of the first network is capable of knowing that a time limit for a temporary cell selection to the second network has expired from a report message to be transmitted from the terminal device. Consequently, appropriate communication control after expiration of the time limit for temporary cell selection to the second network can be performed at the base station of the first network.

The present invention is capable of suppressing a reduction in communication quality when a handover is performed between networks with different communication protocols by transmitting communication quality information on a second network (target network) to a base station of a first network (source network) via an interface between the first network and the second network, with a base station of the second network acting as a relay and, and controlling a handover to the second network based on the communication quality information.

While preferred embodiments of the present invention presently conceivable have been described above, it is understood that various modifications can be made to the embodiments, and it is intended that the appended claims encompass all such modifications within the true spirit and scope of the present invention.

### Industrial Applicability

As described above, a communication system according to the present invention achieves an effect of suppressing a reduction in communication quality when a handover is performed between networks with different communication protocols and is used when performing a handover between a 3GPP network and a non-3GPP network, and is therefore useful.

## Claims

1. A communication system, in a network environment which comprises a first network and a second network which is contained in a communication area of the first network and communication protocol of which differs from that of the first network, wherein a handover of a terminal device is performed between a base station of the first network and a base station of the second network, wherein:
the base station of the first network comprises
handover control means which controls a handover to the base station of the second network for the terminal device which has moved into a communication area of the second network; and
the terminal device comprises
information acquiring means which acquires, in response to the handover to the base station of the second network, communication quality information regarding the communication quality of the second network; and
information transmitting means which transmits the communication quality information to the base station of the first network via an interface provided between the first network and the second network, with the base station of the second network acting as a relay, in order to control the handover to the base station of the second network.

2. The communication system according to claim 1, wherein the terminal device comprises transmission condition setting means which sets a transmission condition, the transmission condition being criteria on whether or not the communication quality information is to be transmitted.

3. The communication system according to claim 2, wherein
the base station of the first network or the base station of the second network comprises a condition transmitting unit which transmits transmission condition information regarding the transmission condition to the terminal device when initiating communication with the terminal device or when performing a handover to the base station of the second network, and
the transmission condition setting unit sets a transmission condition based on the transmission condition information received from the base station of the first network.

4. The communication system according to claim 1, wherein the handover control means performs a handover to return the terminal device handed over to the base station of the second network to the base station of the first network based on the communication quality information transmitted from the terminal device.

5. The communication system according to claim 1, wherein the handover control means suppresses or suspends a handover to the base station of the second network based on the communication quality information transmitted from the terminal device.

6. A terminal device, in a network environment which comprises a first network and a second network which is contained in a communication area of the first network and communication protocol of which differs from that of the first network, wherein a handover of the terminal device is performed between a base station of the first network and a base station of the second network,
the terminal device comprising:
information acquiring means which acquires, in response to the handover to the base station of the second network, communication quality information regarding the communication quality of the second network; and
information transmitting means which transmits the communication quality information to the base station of the first network via an interface provided between the first network and the second network, with the base station of the second network acting as a relay, in order to control the handover to the base station of the second network.

7. A base station provided in a first network, in a network environment which comprises the first network and a second network which is contained in a communication area of the first network and communication protocol of which differs from that of the first network,
the base station comprising:
handover control means which controls a handover to the base station of the second network for a terminal device which has moved into a communication area of the second network; and
information receiving means which receives communication quality information regarding the communication quality of the second network transmitted from the terminal device via an interface provided between the first network and the second network, with the base station of the second network acting as a relay, in order to control the handover to the base station of the second network.

8. A method of managing communication quality when a handover of a terminal device is performed between a base station of a first network and a base station of a second network in a network environment which comprises the first network and the second network which is contained in a communication area of the first network and communication protocol of which differs from that of the first network,
the method comprising:
acquiring, in response to the handover to the base station of the second network, communication quality information regarding the communication quality of the second network; and
transmitting the communication quality information to the base station of the first network via an interface provided between the first network and the second network, with the base station of the second network acting as a relay, in order to control the handover to the base station of the second network.

9. A program for managing communication quality when a handover of a terminal device is performed between a base station of a first network and a base station of a second network in a network environment which comprises the first network and the second network which is contained in a communication area of the first network and communication protocol of which differs from that of the first network,
the program causing a computer to execute:
a process of acquiring, in response to the handover to the base station of the second network, communication quality information regarding the communication quality of the second network; and
a process of transmitting the communication quality information to the base station of the first network via an interface provided between the first network and the second network, with the base station of the second network acting as a relay, in order to control the handover to the base station of the second network.

10. A terminal device wherein, in a network environment in which a cell selection from a first network to a second network is performed based on priority which is set for each network, control is performed in an idle state in the first network,
the terminal device comprising:
receiving means which receives cell selection criteria information which is information describing criteria of cell selection from the first network and which includes the priority information from the base station of the first network;
judging means which judges a validity of cell selection from the first network based on a result of a cell selection attempted based on the cell selection criteria information; and
transmitting means which transmits a report message to the base station of the first network, the report message reporting a judgment result of the validity of the cell selection.

11. A communication system wherein, in a network environment in which a cell selection from a first network to a second network is performed based on priority which is set for each network, communication control is performed between a terminal device in an idle state in the first network and a base station of the first network, wherein:
the base station of the first network comprises
transmitting/receiving means which transmits and receives information regarding the cell selection to/from the terminal device; and
the terminal device comprises
receiving means which receives cell selection criteria information which is information describing criteria of cell selection from the first network and which includes the priority information from the base station of the first network,
judging means which judges a validity of cell selection from the first network based on a result of a cell selection attempted based on the cell selection criteria information, and
transmitting means which transmits a report message to the base station of the first network, the report message reporting a judgment result of the validity of the cell selection.

12. A terminal device wherein, in a network environment in which a cell selection from a first network to a second network is performed based on priority which is set for each network, control is performed after a cell selection to the second network,
the terminal device comprising:
receiving means which receives cell selection criteria information which is information describing criteria of cell selection from the second network and which includes the priority information from the base station of the second network;
judging means which judges a validity of cell selection to the second network based on the cell selection criteria information; and
transmitting means which transmits a report message to the base station of the first network, the report message reporting a judgment result of the validity of the cell selection.

13. A communication system wherein, in a network environment in which a cell selection from a first network to a second network is performed based on priorities set for each network, communication control is performed between a terminal device after a cell selection to the second network and a base station of the first network, wherein:
the base station of the first network and the base station of the second network comprise
transmitting/receiving means which transmits and receives information regarding the cell selection to/from the terminal device; and
the terminal device comprises
receiving means which receives cell selection criteria information which is information describing criteria of cell selection from the second network and which includes the priority information from the base station of the second network,
judging means which judges a validity of cell selection to the second network based on the cell selection criteria information, and
transmitting means which transmits a report message to the base station of the first network, the report message reporting a judgment result of the validity of the cell selection .

14. A terminal device wherein, in a network environment in which a cell selection from a first network to a second network is performed based on priority which is set for each network, control is performed after a temporary cell selection from the first network to the second network ,
the terminal device comprising:
receiving means which receives cell selection criteria information which is information describing criteria of temporary cell selection from the first network and which includes fixed-term information on the priority from the base station of the first network;
judging means which judges whether or not the temporary cell selection time limit has been exceeded based on the cell selection criteria information; and
transmitting means which transmits a report message to the base station of the first network when it is judged that the temporary cell selection time limit has been exceeded, the report message reporting that the time limit has been exceeded.

15. A communication system wherein, in a network environment in which a cell selection from a first network to a second network is performed based on priority which is set for each network, communication control is performed between a terminal device after a temporary cell selection to the second network and a base station of the first network, wherein:
the base station of the first network comprises
transmitting/receiving means which transmits and receives information regarding the temporary cell selection to/from the terminal device; and
the terminal device comprises
receiving means which receives cell selection criteria information which is information describing criteria of temporary cell selection from the first network and which includes fixed-term information on the priority from the base station of the first network,
judging means which judges whether or not the temporary cell selection time limit has been exceeded based on the cell selection criteria information, and
transmitting means which transmits a report message to the base station of the first network when it is judged that the temporary cell selection time limit has been exceeded, the report message reporting that the time limit has been exceeded.
